(19) Europäisches Patentamt
European Patent Office
Office européen des brevets

(11) **EP 3 687 075 B1**

(12) **EUROPEAN PATENT SPECIFICATION**

(45) Date of publication and mention
of the grant of the patent:
**06.04.2022 Bulletin 2022/14**

(21) Application number: **18874525.1**

(22) Date of filing: **30.05.2018**

(51) International Patent Classification (IPC):
*H04B 3/32* (2006.01)

(52) Cooperative Patent Classification (CPC):
**H04B 3/32**

(86) International application number:
**PCT/CN2018/089095**

(87) International publication number:
**WO 2019/085455 (09.05.2019 Gazette 2019/19)**

(54) **A METHOD, DEVICE, AND SYSTEM FOR CANCELING CROSSTALK SIGNAL**

VERFAHREN, VORRICHTUNG UND SYSTEM ZUR UNTERDRÜCKUNG VON ÜBERSPRECHSIGNALEN

PROCÉDÉ, DISPOSITIF, ET SYSTÈME D'ANNULATION DE SIGNAL DE DIAPHONIE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **30.10.2017 CN 201711041077**

(43) Date of publication of application:
**29.07.2020 Bulletin 2020/31**

(73) Proprietor: **Huawei Technologies Co., Ltd.**
**Longgang District**
**Shenzhen, Guangdong 518129 (CN)**

(72) Inventor: **TU, Jianping**
**Shenzhen**
**Guangdong 518129 (CN)**

(74) Representative: **MERH-IP Matias Erny Reichl Hoffmann**
**Patentanwälte PartG mbB**
**Paul-Heyse-Strasse 29**
**80336 München (DE)**

(56) References cited:
WO-A1-2015/179565     CN-A- 105 790 792
US-A1- 2012 236 915     US-A1- 2016 119 025

**Description**

**TECHNICAL FIELD**

This application relates to the communications field, and in particular, to a crosstalk signal cancellation method and apparatus, and a system.

**BACKGROUND**

Digital subscriber line (Digital Subscriber Line, DSL) is a high-speed data transmission technology. In this technology, a distribution point unit (Distribution Point Unit, DPU) may be disposed, and the DPU may be connected to a core network by using a cable such as an optical fiber. The DPU may correspond to a plurality of families. For each family, a twisted pair may be drawn from the DPU into the family, and a terminal in the family may be connected to the twisted pair to access the internet.

Usually, the DPU may be disposed in a basement of a residential building, and a twisted pair drawn into each family in the residential building may be connected to the DPU. Twisted pairs drawn from the DPU are first bound together. A twisted pair for each family on each floor is separated from the bundle of twisted pairs and drawn into the family. For example, it is assumed that there are four families A, B, C, and D in a residential building, A and B are on the first floor, and C and D are on the second floor. Twisted pairs 1, 2, 3, and 4 drawn from a DPU into A, B, C, and D respectively are first bound together, the twisted pairs 1 and 2 are separated from the bundle of twisted pairs and drawn into the families A and B on the first floor respectively, and the twisted pairs 3 and 4 are separated and drawn into the families C and D respectively.

According to an electromagnetic induction principle, a signal in any twisted pair in the bundle of twisted pairs is affected by electromagnetic interference generated by signals in the other twisted pairs. For example, a signal 1 transmitted in the twisted pair 1 is affected by electromagnetic interference generated by a signal 2 in the twisted pair 2, a signal 3 in the twisted pair 3, and a signal 4 in the twisted pair 4. As a result, the signal 1 includes a crosstalk signal, and a crosstalk phenomenon occurs. To avoid a crosstalk phenomenon, a crosstalk signal in a signal needs to be canceled. The following uses the four families A, B, C, and D as an example to describe in detail a procedure of canceling a crosstalk signal in a signal.

The DPU determines a device A1 in the family A, a device B1 in the family B, a device C1 in the family C, and a device D1 in the family D that each currently need to transmit a signal. For the signal 1 of A1, the signal 1 may be a signal sent to A1 or a signal sent by A1. A preset coefficient matrix corresponding to A1 is obtained, and the preset coefficient matrix includes an interference coefficient of A1 to A1, an interference coefficient of B1 to A1, an interference coefficient of C1 to A1, and an interference coefficient of D1 to A1. A crosstalk cancellation signal is generated based on the signal 1 of A1, the signal 2 of B1, the signal 3 of C1, the signal 4 of D1, and the preset coefficient matrix corresponding to A1. If the signal 1 is a signal sent to A1, the crosstalk cancellation signal and the signal 1 are sent together to the twisted pair 1, so that a crosstalk signal generated on the twisted pair 1 is canceled by using the crosstalk cancellation signal. If the signal 1 is a signal sent by A1, a crosstalk signal in the signal 1 is canceled by using the crosstalk cancellation signal. For the signal 2 of B1, the signal 3 of C1, and the signal 4 of D1, a cancellation process is the same as the foregoing process, and details are not described herein again.

In a process of implementing this application, the prior art has the following disadvantage:
Currently, there are usually a plurality of devices in one family, and the plurality of devices may be connected to a twisted pair of the family by using a multi-channel connector. Therefore, a corresponding preset coefficient matrix needs to be set for each device in each family, the DPU needs a large amount of storage space to store preset coefficient matrices corresponding to the devices, and the large amount of storage space is consumed.

US 2016/119025 A1 discloses a method of supporting discontinuous operation in communication systems using vectoring. The method comprises transmitting signals over a plurality of lines, reducing crosstalk of the plurality of lines in a vectored group of vectoring, and modifying the crosstalk reduction based on previous crosstalk reduction in case of a change of composition of the vectored group.

WO 2015/179565 A1 describes the usage of Far End Crosstalk (FEXT) coefficient memory in a G.fast vectoring system. A scheme for efficient management of the Discontinuous (DO) and Regular Operation (RO) FEXT coefficient memories to handle the complexity of lines joining/leaving the system in both regular and DO groups is provided. By disabling the power-efficient, Discontinuous Operation, a G.fast system first frees up the DO coefficient memory. Next, the system uses this memory as the staging area to manage joining/leaving events. Finally the system re-enables to the power-efficient Discontinuous Operation and re-populates the DO coefficient memory. US 2012/236915 A1 describes an access node of a communication system configured to control crosstalk between channels of the system. Vectoring circuitry in the access node is configured to determine estimates of crosstalk from one channel of the system into another channel of the system on multiple sub-channels, to determine compensation coefficients for respective ones of the multiple sub-channels based on the crosstalk estimates, and to generate compensated signals for respective ones of the multiple sub-channels based on the compensation coefficients. At least a given one of the compensation coefficients is determined for use in the generation of compensated signals by decompressing a compressed representation of the given compensation coefficient. The compressed representation is decompressed by evaluating a parameterized function of a plurality of control parameters.

**SUMMARY**

The present invention is defined by the attached independent claims. Other preferred embodiments may be found in the dependent claims.

To reduce consumption of storage space, embodiments of this application provide a crosstalk signal cancellation method and apparatus, and a system. The technical solutions are as follows:

According to the present invention a crosstalk signal cancellation method, wherein the method is applied to a twisted-pair communications system, the twisted-pair communications system comprises a first line and at least one second line, the first line connects a first network node and a first user node, and the at least one second line connects at least one second network node and at least one second user node; crosstalk exists between the first line and the at least one second line; the first user node is connected to at least first customer-premises equipment, CPE, and second CPE; and the first CPE and the second CPE communicate with the first network node in a time division multiplexing manner; wherein the method comprises:when the first network node communicates with the first CPE, obtaining a first crosstalk coefficient between the first line and the at least one second line based on an error signal fed back by the first CPE, wherein the first crosstalk coefficient is used to precode a signal to be sent to the first CPE; and when the first network node communicates with the second CPE, precoding, based on the first crosstalk coefficient between the first line and the at least one second line and a first update factor, a signal to be sent to the second CPE, wherein the first update factor is used to represent a change of the first crosstalk coefficient between the first line and the at least one second line or a change of crosstalk signals generated on the first line and the at least one second line; characterized in that the first update factor comprises a first transmission parameter of a channel corresponding to one CPE connected to the first user node and a first transmission parameter of a channel corresponding to one CPE connected to each of the at least one second user node; and wherein the precoding, based on the first crosstalk coefficient between the first line and the at least one second line and a first update factor, a signal to be sent to the second CPE comprises:adjusting, based on the first transmission parameter of the channel corresponding to the CPE connected to the first user node, a downstream signal sent to the second CPE, to obtain a target signal of the second CPE;adjusting, based on the first transmission parameter of the channel corresponding to the CPE connected to each second user node, a downstream signal sent to third CPE that communicates with each of the at least one second network node, to obtain a target signal of the third CPE that communicates with each second network node; andprecoding, based on the first crosstalk coefficient between the first line and the at least one second line, the target signal of the second CPE, and the target signal of the third CPE that communicates with each second network node, the signal to be sent to the second CPE. According to the present invention a crosstalk signal cancellation apparatus (1000), wherein the apparatus (1000) comprises a processing unit (1001) and is applied to a twisted-pair communications system, the twisted-pair communications system comprises a first line and at least one second line, the first line connects a first network node and a first user node, and the at least one second line connects at least one second network node and at least one second user node; crosstalk exists between the first line and the at least one second line; the first user node is connected to at least first customer-premises equipment, CPE, and second CPE; and the first CPE and the second CPE communicate with the first network node in a time division multiplexing manner; wherein the processing unit (1001) is configured to: when the first network node communicates with the first CPE, obtain a first crosstalk coefficient between the first line and the at least one second line based on an error signal fed back by the first CPE, wherein the first crosstalk coefficient is used to precode a signal to be sent to the first CPE; and the processing unit (1001) is further configured to: when the first network node communicates with the second CPE, precode, based on the first crosstalk coefficient between the first line and the at least one second line and a first update factor, a signal to be sent to the second CPE, wherein the first update factor is used to represent a change of the first crosstalk coefficient between the first line and the at least one second line or a change of crosstalk signals generated on the first line and the at least one second line, characterized in that the first update factor comprises a first transmission parameter of a channel corresponding to one CPE connected to the first user node and a first transmission parameter of a channel corresponding to one CPE connected to each of the at least one second user node; and wherein the processing unit (1001) is further configured to:adjust, based on the first transmission parameter of the channel corresponding to the CPE connected to the first user node, a downstream signal sent to the second CPE, to obtain a target signal of the second CPE;adjust, based on the first transmission parameter of the channel corresponding to the CPE connected to each second user node, a downstream signal sent to third CPE that communicates with each of the at least one second network node, to obtain a target signal of the third CPE that communicates with each second network node; and precode, based on the first crosstalk coefficient between the first line and the at least one second line, the target signal of the second CPE, and the target signal of the third CPE that communicates with each second network node, the signal to be sent to the second CPE.

**BRIEF DESCRIPTION OF DRAWINGS**

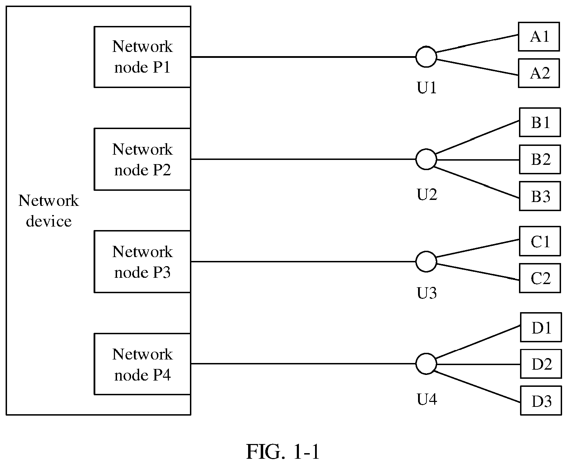

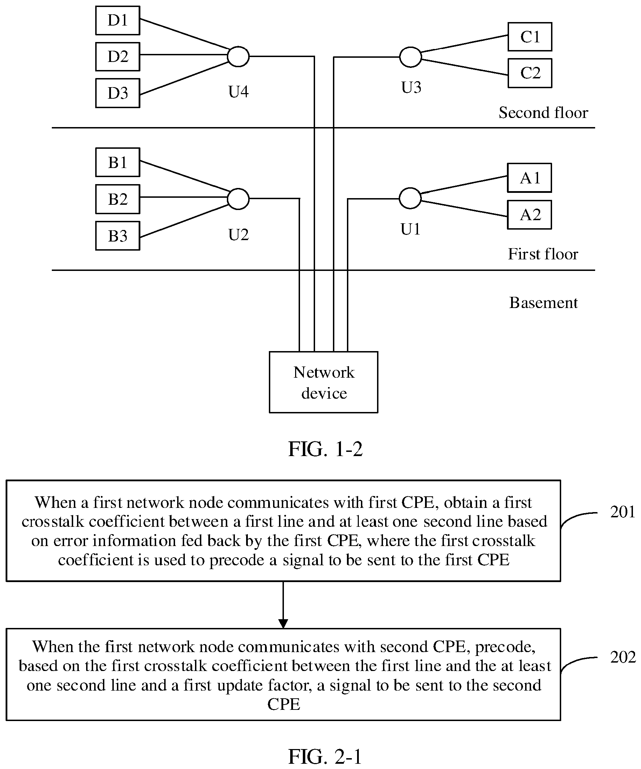

FIG. 1-1 is a schematic structural diagram of a twisted-pair communications system according to an embodiment of this application;
FIG. 1-2 is a schematic structural diagram of a twisted-pair communications system according to an embodiment of this application;
FIG. 2-1 is a flowchart of a crosstalk signal cancellation method according to an embodiment of this application;
FIG. 2-2 is a schematic structural diagram of a network device according to an embodiment of this application;
FIG. 3 is a flowchart of another crosstalk signal cancellation method according to an embodiment of this application;
FIG. 4 is a flowchart of another crosstalk signal cancellation method according to an embodiment of this application;
FIG. 5 is a flowchart of another crosstalk signal cancellation method according to an embodiment of this application;
FIG. 6 is a flowchart of another crosstalk signal cancellation method according to an embodiment of this application;
FIG. 7 is a flowchart of another crosstalk signal cancellation method according to an embodiment of this application;
FIG. 8 is a flowchart of another crosstalk signal cancellation method according to an embodiment of this application;
FIG. 9 is a flowchart of another crosstalk signal cancellation method according to an embodiment of this application;
FIG. 10-1 is a schematic structural diagram of a crosstalk signal cancellation apparatus according to an embodiment of this application;
FIG. 10-2 is a schematic structural diagram of another crosstalk signal cancellation apparatus according to an embodiment of this application; and
FIG. 11 is a schematic structural diagram of another crosstalk signal cancellation apparatus according to an embodiment of this application.

**DESCRIPTION OF EMBODIMENTS**

To make the objectives, technical solutions, and advantages of this application clearer, the following further describes the implementations of this application in detail with reference to the accompanying drawings.
Referring to FIG. 1-1, an embodiment of this application provides a twisted-pair communications system, including:
a network device, a plurality of user nodes, and a plurality of customer-premises equipments (Customer Premises Equipment, CPE).
The network device includes a plurality of network nodes, and each network node corresponds to one user node.
Each network node is connected to a corresponding user node of the network node by using a line, crosstalk exists between lines connected to the network nodes, and each user node is further connected to at least one CPE.
For example, in the twisted-pair communications system shown in FIG. 1-1, the network device includes four network nodes: P1, P2, P3, and P4; there are four user nodes: U1, U2, U3, and U4; and there are ten CPEs: A1, A2, B1, B2, B3, C1, C2, D1, D2, and D3.
P1 and U1 are connected by using a line 1, P2 and U2 are connected by using a line 2, P3 and U3 are connected by using a line 3, and P4 and U4 are connected by using a line 4. Crosstalk exists between the lines 1, 2, 3, and 4. A1 and A2 are connected to U1; B 1, B2, and B3 are connected to U2; C1 and C2 are connected to U3; and D1, D2, and D3 are connected to U4.
The network device may be a DPU or the like, the network node may be a transceiver in the DPU, and the user node may be a multi-channel connector or the like. The network device may send a downstream signal to the CPE by using each transceiver, or receive, by using each transceiver, an upstream signal or an error signal or the like sent by the CPE.
The lines in the twisted-pair communications system may be bound together when drawn from the network device, and then are separated and connected to the user nodes. Therefore, crosstalk exists between these lines. For example, the network architecture shown in FIG. 1-1 may be applied to communication networking in a residential building. In a residential building shown in FIG. 1-2, families A and B are on the first floor, families C and D are on the second floor, U1, A1, and A2 belong to the family A, U2, B1, B2, and B3 belong to the family B, U3, C1, and C2 belong to the family C, and U4, D1, D2, and D3 belong to the family D.
The network device may be deployed in a basement of the residential building, and the lines 1, 2, 3, and 4 are first bound together after drawn from the network device. On the first floor, the lines 1 and 2 are separated from the bound lines and connected to the user nodes U1 and U2 respectively. On the second floor, the lines 3 and 4 are separated and connected to the user nodes U3 and U4 respectively. Because the lines 1, 2, 3, and 4 each have a segment of line bound together, crosstalk exists between the lines 1, 2, 3, and 4.

For each user node, all CPEs connected to the user node communicate, in a time division multiplexing manner, with a network node corresponding to the user node. The time division multiplexing manner refers to that the network device may allocate a slot to each of the CPEs, and slots of the CPEs are different from each other. In the slot of each CPE, the CPE communicates, by using a line, with the network node corresponding to the user node.

For example, for the user node U1, and A1 and A2 connected to U1, the network device may allocate a slot to each of A1 and A2. A1 may communicate with the network node P1 in the network device in a slot corresponding to A1, and A2 may communicate with the network node P1 in the network device in a slot corresponding to A2.

For another example, for the user node U2, and B1, B2, and B3 connected to U2, the network device may allocate a slot to each of B1, B2, and B3. B1 may communicate with the network node P2 in the network device in a slot corresponding to B1, B2 may communicate with the network node P2 in the network device in a slot corresponding to B2, and B3 may communicate with the network node P3 in the network device in a slot corresponding to B3.

In both cases of the user node U3, and C1 and C2 connected to U3, and the user node U4, and D1, D2, and D3 connected to U4, the foregoing time division multiplexing manner is used for communication, and examples are not listed herein one by one.

An embodiment of this application provides a crosstalk signal cancellation method. The method may be applied to the twisted-pair communications system shown in FIG. 1-1. The twisted-pair communications system includes a first line and at least one second line, the first line connects a first network node and a first user node, and the at least one second line connects at least one second network node and at least one second user node; crosstalk exists between the first line and the at least one second line; the first user node is connected to at least first CPE and second CPE; and the first CPE and the second CPE communicate with the first network node in a time division multiplexing manner.

A signal to be canceled in this embodiment of this application may be a downstream signal sent by a network device to CPE, and an execution body may be the network device. Referring to FIG. 2-1, the method may include the following steps.

Step 201: When the first network node communicates with the first CPE, obtain a first crosstalk coefficient between the first line and the at least one second line based on an error signal fed back by the first CPE, where the first crosstalk coefficient is used to precode a signal to be sent to the first CPE.

The first line is any line in the twisted-pair communications system, and the second line is a line other than the first line in the twisted-pair communications system. A network node that is in the network device and that is connected to the first line is the first network node, and a user node that is connected to the first line is the first user node. A network node other than the first network node in the network device is the second network node, a line other than the first line in the twisted-pair communications system is the second line, and a user node other than the first user node in the twisted-pair communications system is the second user node. Therefore, the twisted-pair communications system includes the at least one second network node, the at least one second line, and the at least one second user node. The at least one second line connects the at least one second network node and the at least one second user node. In other words, each of the at least one second line corresponds to one second network node and one second user node, each second line corresponds to a different second network node, each second line corresponds to a different second user node, and each second line connects a second network node and a second user node that correspond to the second line.

For example, in the twisted-pair communications system shown in FIG. 1-1, it is assumed that the line 1 is a first line, and the lines 2, 3, and 4 are second lines. In this case, P1 is a first network node, P2, P3, and P4 are second network nodes, U1 is a first user node, and U2, U3, and U4 are second user nodes. The first line 1 connects the first network node P1 and the first user node U1, the second line 2 connects the second network node P2 and the second user node U2, the second line 3 connects the second network node P3 and the second user node U3, and the second line 4 connects the second network node P4 and the second user node U4.

This step may be performed in the first slot after the twisted-pair communications system changes. A case in which the twisted-pair communications system changes may be as follows: The network device establishes the twisted-pair communications system with the user nodes after being started, or a new line is added to the twisted-pair communications system, or a line corresponding to a family stops working because devices in the family are shut down, or the like.

For each user node, CPEs connected to the user node communicate with a network node in the network device in a time division multiplexing manner. In other words, the network device allocates a slot to each CPE, and the CPE communicates with the network node in the slot corresponding to the CPE. For ease of description, CPE that is in the CPEs connected to the first user node and that communicates with the first network node in the first slot is referred to as the first CPE. The first user node is connected to at least the first CPE and the second CPE, and the first CPE and the second CPE may be same CPE or different CPEs. One CPE that communicates with the second network node is referred to as fourth CPE.

This step may be as follows: In the first slot after the twisted-pair communications system changes, the network device may receive the error signal fed back by the first CPE, and further receive an error signal fed back by the fourth CPE that communicates with each second network node; and obtain the first crosstalk coefficient between the first line and the at least one second line based on the error signal fed back by the first CPE and the error signal fed back by the fourth CPE that communicates with each second network node.

Optionally, the network device may receive, by using the first network node, the error signal fed back by the first CPE. For each second network node, the network device may receive, by using the second network node, the error signal fed back by the fourth CPE that communicates with the second network node.

The first crosstalk coefficient between the first line and the at least one second line may include a crosstalk coefficient of the first CPE to the first CPE and a crosstalk coefficient of each fourth CPE to the first CPE.

For example, in the first slot after the twisted-pair communications system shown in FIG. 1-1 is established, A1 communicates with the first network node P1, B1 communicates with the second network node P2, C1 communicates with the second network node P3, and D1 communicates with the second network node P4. The network device may receive an error signal fed back by A1, an error signal fed back by B 1, an error signal fed back by C1, and an error signal fed back by D1; and obtain a first crosstalk coefficient between the first line 1 and the second lines 2, 3, and 4 based on the error signal fed back by A1, the error signal fed back by B1, the error signal fed back by C1, and the error signal fed back by D1. The first crosstalk coefficient between the first line 1 and the second lines 2, 3, and 4 includes a crosstalk coefficient of A1 to A1, a crosstalk coefficient of B1 to A1, a crosstalk coefficient of C1 to A1, and a crosstalk coefficient of D1 to A1.

For each second line, a first crosstalk coefficient between the second line, and the first line and the other second lines is obtained in the foregoing manner. The following uses the twisted-pair communications system shown in FIG. 1-1 as an example for detailed description.

For the second line 2, the network device obtains a first crosstalk coefficient between the second line 2, and the first line 1 and the second lines 3 and 4 based on the error signal fed back by A1, the error signal fed back by B 1, the error signal fed back by C 1, and the error signal fed back by D1. For the second line 3 and the second line 4, first crosstalk coefficients are both obtained according to the foregoing method. Optionally, after the first crosstalk coefficient is obtained, a signal to be sent to CPE that communicates with each network node may be precoded in the first slot. For example, for the first CPE, a downstream signal sent to the first CPE and a downstream signal sent to each fourth CPE may be first obtained; a crosstalk cancellation signal is generated based on the first crosstalk coefficient, the downstream signal sent to the first CPE, and the downstream signal sent to each fourth CPE; and a signal to be sent to the first CPE is generated based on the crosstalk cancellation signal and the downstream signal sent to the first CPE.

Then, the network device may send the generated signal on the first line by using the first network node. When the signal is transmitted on the first line, the crosstalk cancellation signal in the signal cancels a crosstalk signal generated on the first line by the twisted-pair communications system, so that a signal received by the first CPE from the first line does not include a crosstalk signal.

For example, a downstream signal $X_{A1}$ sent to A1, a downstream signal $X_{B1}$ sent to B1, a downstream signal $X_{C1}$ sent to C1, and a downstream signal $X_{D1}$ sent to D1 are obtained; a crosstalk cancellation signal $K_{A1}$ is generated based on the first crosstalk coefficient, and the downstream signals $X_{A1}$, $X_{B1}$, $X_{C1}$, and $X_{D1}$; a signal $H_{A1}$ to be sent to A1 is generated based on the crosstalk cancellation signal $K_{A1}$ and the downstream signal $X_{A1}$; and then the generated signal $H_{A1}$ is sent to A1 on the first line 1 by using the first network node P1.

The first crosstalk coefficient between the first line 1 and the second lines 2, 3, and 4 may include a crosstalk coefficient $a_{11}$ of A1 to A1, a crosstalk coefficient $a_{12}$ of B1 to A1, a crosstalk coefficient $a_{13}$ of C1 to A1, and a crosstalk coefficient $a_{14}$ of D1 to A1. Therefore, the generated crosstalk cancellation signal $K_{A1}$ is shown in the following formula (1), and the generated signal $H_{A1}$ to be sent to A1 is shown in the following formula (2).

$$K_{A1} = \begin{bmatrix} a_{11} & a_{12} & a_{13} & a_{14} \end{bmatrix} \bullet \begin{bmatrix} X_{A1} \\ X_{B1} \\ X_{C1} \\ X_{D1} \end{bmatrix} \quad (1)$$

$$H_{A1} = X_{A1} + \begin{bmatrix} a_{11} & a_{12} & a_{13} & a_{14} \end{bmatrix} \bullet \begin{bmatrix} X_{A1} \\ X_{B1} \\ X_{C1} \\ X_{D1} \end{bmatrix} \quad (2)$$

For the fourth CPE that performs communication on the second line, a signal to be sent to the fourth CPE is generated in the foregoing manner. The following still uses the twisted-pair communications system shown in FIG. 1-1 as an example for detailed description.

For B1, a crosstalk cancellation signal $K_{B1}$ is generated based on the first crosstalk coefficient between the second line 2, and the first line 1 and the second lines 3 and 4, and the downstream signals $X_{A1}$, $X_{B1}$, $X_{C1}$, and $X_{D1}$; then a signal $H_{B1}$ to be sent to B1 is generated based on the crosstalk cancellation signal $K_{B1}$ and the downstream signal $X_{B1}$ sent to B1; and the generated signal $H_{B1}$ is sent to B1 on the second line 2 by using the second network node P2.

The first crosstalk coefficient between the second line 2, and the first line 1 and the second lines 3 and 4 may include a crosstalk coefficient $b_{11}$ of A1 to B1, a crosstalk coefficient $b_{12}$ of B1 to B1, a crosstalk coefficient $b_{13}$ of C1 to B1, and a crosstalk coefficient $b_{14}$ of D1 to B1. Therefore, the generated crosstalk cancellation signal $K_{B1}$ is shown in the following formula (3), and the generated signal $H_{B1}$ to be sent to B1 is shown in the following formula (4).

$$K_{B1} = \begin{bmatrix} b_{11} & b_{12} & b_{13} & b_{14} \end{bmatrix} \bullet \begin{bmatrix} X_{A1} \\ X_{B1} \\ X_{C1} \\ X_{D1} \end{bmatrix} \quad (3)$$

$$H_{B1} = X_{B1} + \begin{bmatrix} b_{11} & b_{12} & b_{13} & b_{14} \end{bmatrix} \bullet \begin{bmatrix} X_{A1} \\ X_{B1} \\ X_{C1} \\ X_{D1} \end{bmatrix} \quad (4)$$

For C1 and D1, a signal to be sent to C1 and a signal to be sent to D1 are generated in a same manner as the foregoing manner of generating the signal to be sent to B 1.

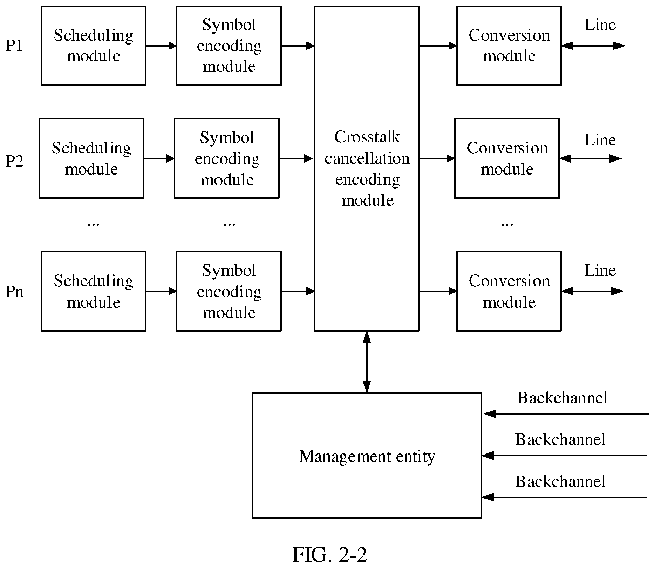

Optionally, referring to FIG. 2-2, in this embodiment, the network device may include a crosstalk cancellation encoding module and a management entity, and each network node includes a scheduling module, a symbol encoding module, and a conversion module.

The scheduling module of each network node may schedule CPE connected to a user node corresponding to the network node. The management entity may receive, by using the network node, an error signal fed back by the CPE, obtain a first crosstalk coefficient based on the error signal fed back by each scheduled CPE, and send the first crosstalk coefficient to the crosstalk cancellation encoding module. Optionally, the management entity may receive, by using a backchannel of the CPE, the error signal fed back by the CPE.

The symbol encoding module in the network node may obtain a downstream signal sent to the CPE, and send the downstream signal of the CPE to the crosstalk cancellation encoding module. The crosstalk cancellation encoding module encodes, based on the downstream signal of each scheduled CPE and the first crosstalk coefficient, a signal to be sent to the CPE, and sends the signal to the conversion module included in the network node. The conversion module converts the signal into a time domain signal, and sends the time domain signal to the CPE on a line connected to the conversion module.

Optionally, the conversion module may include a receiving unit and a sending unit (not shown in the figure). The management entity may receive, by using the receiving unit in the network node, the error signal fed back by the CPE. After converting the signal into a time domain signal, the conversion module sends, by using the sending unit, the time domain signal to the CPE on the line connected to the conversion module.

Step 202: When the first network node communicates with the second CPE, precode, based on the first crosstalk coefficient between the first line and the at least one second line and a first update factor, a signal to be sent to the second CPE.

The first update factor is used to represent a change of the first crosstalk coefficient between the first line and the at least one second line or a change of crosstalk signals generated on the first line and the at least one second line.

The first update factor includes a first transmission parameter of a channel corresponding to one CPE connected to the first user node and a first transmission parameter of a channel corresponding to one CPE connected to each of the at least one second user node. The first transmission parameter of the channel corresponding to the CPE may be a transmit spectrum shaping (Transmit spectrum shaping, TSSi) value and/or a variable gain amplifier (variable gain amplifier, VGA) value of the channel corresponding to the CPE. The first transmission parameter may further include another parameter, for example, may further include at least one of parameters such as a gain, a transmitter initiated gain adjustment (Transmitter Initiated Gain Adjustment, TIGA), and a symbol alignment (Symbol Alignment, SA).

The second CPE may be the first CPE or CPE other than the first CPE. In any slot after the first crosstalk coefficient between the first line and the at least one second line is obtained, a signal to be sent to CPE may be precoded by using this step.

In a current slot, one CPE that communicates with each second network node is referred to as third CPE.

This step may be as follows: In the current slot, a downstream signal sent to the second CPE and a downstream signal sent to the third CPE that communicates with each second network node are obtained; a crosstalk cancellation signal is generated based on the downstream signal sent to the second CPE, the downstream signal sent to each third CPE, the first crosstalk coefficient between the first line and the at least one second line, and the first update factor; and the signal to be sent to the second CPE is generated based on the crosstalk cancellation signal and the downstream signal sent to the second CPE.

Optionally, the network device sends the generated signal to the second CPE on the first line by using the first network node; and when the signal is transmitted on the first line, the crosstalk cancellation signal in the signal cancels a crosstalk signal generated on the first line. In this way, a signal received by the second CPE from the first line does not include a crosstalk signal.

Optionally, referring to FIG. 2-2, a scheduling module of the first network node may schedule CPE connected to the first user node, namely, the second CPE. A symbol encoding module of the first network node may obtain the downstream signal sent to the second CPE, and send the downstream signal of the second CPE to a crosstalk cancellation encoding module. The crosstalk cancellation encoding module precodes, based on a downstream signal of each scheduled CPE, the first crosstalk coefficient, and the first update factor, the signal to be sent to the second CPE, and sends the signal to a conversion module included in the first network node. The conversion module converts the signal into a time domain signal, and sends the time domain signal to the second CPE on the first line.

For each second line, a signal to be sent to each third CPE is precoded in the foregoing signal precoding manner. The following still uses the twisted-pair communications system shown in FIG. 1-1 as an example for detailed description.

For example, in the current slot, A2 communicates with the first network node P1, B1 communicates with the second network node P2, C2 communicates with the second network node P3, and D3 communicates with the second network node P4. The network device may obtain a downstream signal $X_{A2}$ sent to A2, the downstream signal $X_{B1}$ sent to B1, a downstream signal Xc2 sent to C2, and a downstream signal $X_{D3}$ sent to D3; generate a crosstalk cancellation signal $K_{A2}$ based on the first crosstalk coefficient between the first line 1 and the second lines 2, 3, and 4, and the downstream signals $X_{A2}$, $X_{B1}$, $X_{C2}$, and $X_{D3}$; generate, based on the crosstalk cancellation signal $K_{A2}$ and the downstream signal $X_{A2}$ sent to A2, a signal $H_{A2}$ to be sent to A2; and then send, on the first line 1 by using the first network node P1, the generated signal $H_{A2}$ to A2.

For the second line 2, the network device generates a crosstalk cancellation signal $K_{B1}$ based on the first crosstalk coefficient between the second line 2, and the first line 1 and the second lines 3 and 4, and the downstream signals $X_{A2}$, $X_{B1}$, $X_{C2}$, and $X_{D3}$; generates, based on the crosstalk cancellation signal $K_{B1}$ and the downstream signal $X_{B1}$ sent to B1, a signal $H_{B1}$ to be sent to B1; and then sends, on the second line 2 by using the second network node P2, the generated signal $H_{B1}$ to B1.

For both the second line 3 and the second line 4, a signal to be sent to C2 and a signal to be sent to D3 are generated according to the foregoing method.

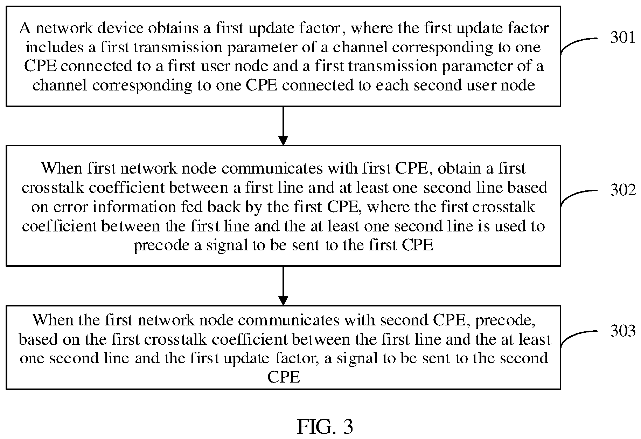

A more detailed implementation process of this embodiment has a plurality of manners. Three instances shown in FIG. 3, FIG. 4, and FIG. 5 are listed in this application, and other instances are not listed one by one. Detailed processes of the three instances are described later.

In this embodiment of this application, after the first crosstalk coefficient between the first line and the at least one second line is obtained, when the first network node communicates with the second CPE, the signal to be sent to the second CPE can be precoded based on only the first update factor and the first crosstalk coefficient between the first line and the at least one second line. Therefore, the first crosstalk coefficient does not need to be re-estimated, and there is no need to store, in the network device, first crosstalk coefficients corresponding to all the CPEs, so that occupation of storage space is reduced. The crosstalk signal cancellation method in this embodiment is also applicable to a near-end crosstalk cancellation scenario.

A detailed process of crosstalk signal cancellation in the method in the embodiment shown in FIG. 2-1 is shown as follows. Referring to FIG. 3, a process of the method may include the following steps.

Step 301: A network device obtains a first update factor, where the first update factor includes a first transmission parameter of a channel corresponding to one CPE connected to a first user node and a first transmission parameter of a channel corresponding to one CPE connected to each second user node.

This step may be implemented by using the following steps 3011 to 3013, including:

3011: The network device obtains transmission parameters of channels corresponding to all CPEs connected to a first user node, and selects, from the transmission parameters of the channels corresponding to all the CPEs connected to the first user node, a transmission parameter of a channel corresponding to one CPE.

A transmission parameter of a channel corresponding to CPE may include a TSSi value and/or a VGA value of the CPE, and may further include another parameter, for example, may include at least one of parameters such as a gain, a TIGA, and an SA. Specifically, the network device schedules all the CPEs connected to the first user node, and upon scheduling CPE, sends a measurement request to the CPE on a first line by using a first network node. The CPE receives the measurement request, obtains a measured value of a TSSi-related parameter based on the measurement request, and sends the measured value of the TSSi-related parameter to the network device on the first line. The TSSi-related parameter includes at least one of parameters such as a distance, an electrical length, a signal-to-noise ratio (Signal-to-Noise Ratio, SNR), receive-end total power, and receive-end power spectral density. The network device receives the measured value of the TSSi-related parameter, calculates a TSSi value based on the measured value of the TSSi-related parameter, and calculates a VGA value based on the TSSi value, to obtain a transmission parameter of a channel corresponding to the CPE. The network device obtains, in the foregoing manner, transmission parameters of channels corresponding to all other CPEs connected to the first user node, and selects, from the transmission parameters of the channels corresponding to all the CPEs connected to the first user node, a transmission parameter of a channel corresponding to one CPE.

3012: For each second user node, obtain transmission parameters of channels corresponding to all CPEs connected to the second user node, and select, from the transmission parameters of the channels corresponding to all the CPEs connected to the second user node, a transmission parameter of a channel corresponding to one CPE.

Specifically, the network device schedules all the CPEs connected to the second user node, and upon scheduling CPE, sends a measurement request to the CPE on a second line by using a second network node. The CPE receives the measurement request, obtains a measured value of a TSSi-related parameter based on the measurement request, and sends the measured value of the TSSi-related parameter to the network device on the second line. The network device receives the measured value of the TSSi-related parameter, calculates a TSSi value based on the measured value of the TSSi-related parameter, and calculates a VGA value based on the TSSi value, to obtain a transmission parameter of a channel corresponding to the CPE. The network device obtains, in the foregoing manner, transmission parameters of channels corresponding to all other CPEs connected to the second user node, and selects, from the transmission parameters of the channels corresponding to all the CPEs connected to the second user node, a transmission parameter of a channel corresponding to one CPE.

3013: Generate the first update factor based on the selected transmission parameters of the channels corresponding to the CPEs. In other words, the first update factor includes the selected transmission parameters of the channels corresponding to the CPEs.

Step 302: When the first network node communicates with first CPE, obtain a first crosstalk coefficient between the first line and at least one second line based on an error signal fed back by the first CPE, where the first crosstalk coefficient between the first line and the at least one second line is used to precode a signal to be sent to the first CPE.

For a detailed implementation process of this step, refer to related content described in the corresponding step 201. Details are not described herein again.

Optionally, step 301 may not be performed first. Instead, in this step, a transmission parameter of a channel corresponding to the first CPE and a transmission parameter of a channel corresponding to one CPE that communicates with each second network node may be obtained, and the obtained transmission parameters form the first update factor. Step 303: When the first network node communicates with second CPE, precode, based on the first crosstalk coefficient between the first line and the at least one second line and the first update factor, a signal to be sent to the second CPE.

During actual implementation, this step may be implemented by using the following steps 3031 to 3033, which are as follows:

3031: Adjust, based on the first transmission parameter of the channel corresponding to the CPE connected to the first user node, a downstream signal sent to the second CPE, to obtain a target signal of the second CPE.

Optionally, the downstream signal sent to the second CPE is obtained, and a phase and an amplitude of the downstream signal sent to the second CPE are adjusted based on a TSSi value and/or a VGA value included in the first transmission parameter of the channel corresponding to the CPE connected to the first user node, to obtain the target signal of the second CPE.

For example, in a current slot, A2 communicates with the first network node P1, B1 communicates with the second network node P2, C2 communicates with the second network node P3, and D3 communicates with the second network node P4. The network device may obtain a downstream signal $X_{A2}$ sent to A2, and adjust, based on a TSSi value and/or a VGA value included in a first transmission parameter of a channel corresponding to one CPE connected to the first user node, a phase and an amplitude of the downstream signal $X_{A2}$ sent to A2, to obtain a target signal $X'_{A2}$ of A2.

3032: For each second user node, adjust, based on the first transmission parameter of the channel corresponding to the CPE connected to the second user node, a downstream signal sent to third CPE that communicates with the second network node, to obtain a target signal of the third CPE.

For example, the network device may obtain a downstream signal $X_{B1}$ sent to B1, and adjust, based on a TSSi value and/or a VGA value included in a first transmission parameter of a channel corresponding to one CPE connected to a second user node U2, a phase and an amplitude of the downstream signal $X_{B1}$ sent to B1, to obtain a target signal $X'_{B1}$ of B1.

For another example, the network device may obtain a downstream signal $X_{C2}$ sent to C2, and adjust, based on a TSSi value and/or a VGA value included in a first transmission parameter of a channel corresponding to one CPE connected to a second user node U3, a phase and an amplitude of the downstream signal $X_{C2}$ sent to C2, to obtain a target signal $X'_{C2}$ of C2.

For still another example, the network device may obtain a downstream signal $X_{D3}$ sent to D3, and adjust, based on a TSSi value and/or a VGA value included in a first transmission parameter of a channel corresponding to one CPE connected to a second user node U4, a phase and an amplitude of the downstream signal $X_{D3}$ sent to D3, a target signal $X'_{D3}$ of D3.

3033. Precode, based on the first crosstalk coefficient between the first line and the at least one second line, the target signal of the second CPE, and the target signal of the third CPE that communicates with each second network node, the signal to be sent to the second CPE.

Specifically, a crosstalk cancellation signal is generated based on the first crosstalk coefficient between the first line and the at least one second line, the target signal of the second CPE, and the target signal of the third CPE that communicates with each second network node, and the signal to be sent to the second CPE is generated based on the crosstalk cancellation signal and the target signal of the second CPE.

Optionally, the network device sends the signal to the second CPE on the first line by using the first network node, and when the signal is transmitted on the first line, a crosstalk cancellation signal in the signal cancels a crosstalk signal generated on the first line. Therefore, a signal received by the second CPE from the first line does not include a crosstalk signal.

For each second line, a signal to be sent to each third CPE is generated in the foregoing signal generation manner. The following still uses the twisted-pair communications system shown in FIG. 1-1 as an example for detailed description.

For example, in the current slot, the network device generates a crosstalk cancellation signal $K_{A2}$ based on the first crosstalk coefficient between the first line 1 and the second lines 2, 3, and 4, the target signal $X'_{A2}$ of A2, the target signal $X'_{B1}$ of B1, the target signal $X'_{C2}$ of C2, and the target signal $X'_{D3}$ of D3; generates, based on the crosstalk cancellation signal $K_{A2}$ and the target signal $X'_{A2}$ of A2, a signal $H_{A2}$ to be sent to A2; and then sends the generated signal $H_{A2}$ to A2 on the first line 1 by using the first network node P1.

The first crosstalk coefficient between the first line 1 and the second lines 2, 3, and 4 includes $a_{11}$, $a_{12}$, $a_{13}$, and $a_{14}$. Therefore, the generated crosstalk cancellation signal $K_{A2}$ is shown in the following formula (5), and the generated signal $H_{A2}$ is shown in the following formula (6).

$$K_{A2} = \begin{bmatrix} a_{11} & a_{12} & a_{13} & a_{14} \end{bmatrix} \bullet \begin{bmatrix} X'_{A2} \\ X'_{B1} \\ X'_{C2} \\ X'_{D3} \end{bmatrix} \quad (5)$$

$$H_{A2} = X'_{A2} + \begin{bmatrix} a_{11} & a_{12} & a_{13} & a_{14} \end{bmatrix} \bullet \begin{bmatrix} X'_{A2} \\ X'_{B1} \\ X'_{C2} \\ X'_{D3} \end{bmatrix} \quad (6)$$

For the second line 2, the network device generates a crosstalk cancellation signal $K_{B1}$ based on a first crosstalk coefficient between the second line 2, and the first line 1 and the second lines 3 and 4, the target signal $X'_{A2}$ of A2, the target signal $X'_{B1}$ of B1, the target signal $X'_{C2}$ of C2, and the target signal $X'_{D3}$ of D3; generates, based on the crosstalk cancellation signal $K_{B1}$ and the target signal $X'_{B1}$ of B1, a signal $H_{B1}$ to be sent to B1; and then sends the generated signal $H_{B1}$ to B1 on the second line 2 by using the second network node P2.

The first crosstalk coefficient between the second line 2, and the first line 1 and the second lines 3 and 4 includes $b_{11}$, $b_{12}$, $b_{13}$, and $b_{14}$. Therefore, the generated crosstalk cancellation signal $K_{B1}$ is shown in the following formula (7), and the generated signal $H_{B1}$ is shown in the following formula (8).

$$K_{B1} = \begin{bmatrix} b_{11} & b_{12} & b_{13} & b_{14} \end{bmatrix} \bullet \begin{bmatrix} X'_{A2} \\ X'_{B1} \\ X'_{C2} \\ X'_{D3} \end{bmatrix} \quad (7)$$

$$H_{B1} = X'_{B1} + \begin{bmatrix} b_{11} & b_{12} & b_{13} & b_{14} \end{bmatrix} \bullet \begin{bmatrix} X'_{A2} \\ X'_{B1} \\ X'_{C2} \\ X'_{D3} \end{bmatrix} \quad (8)$$

For both the second line 3 and the second line 4, a signal to be sent to C2 and a signal to be sent to D3 are generated according to the foregoing method.

In this embodiment of this application, after the first update factor and the first crosstalk coefficient between the first line and the at least one second line are obtained, when the first network node communicates with the second CPE, the downstream signal sent to the second CPE is adjusted based on the first update factor, to obtain the target signal of the second CPE; the downstream signal sent to the CPE that communicates with each second network node is adjusted based on the first update factor, to obtain the target signal of the CPE that communicates with each second network node; and then the signal to be sent to the second CPE may be precoded based on the target signal of the second CPE, the target signal of the CPE that communicates with each second network node, and the first crosstalk coefficient between the first line and the at least one second line. Therefore, there is no need to store, in the network device, first crosstalk coefficients corresponding to all the CPEs, so that occupation of storage space is reduced.

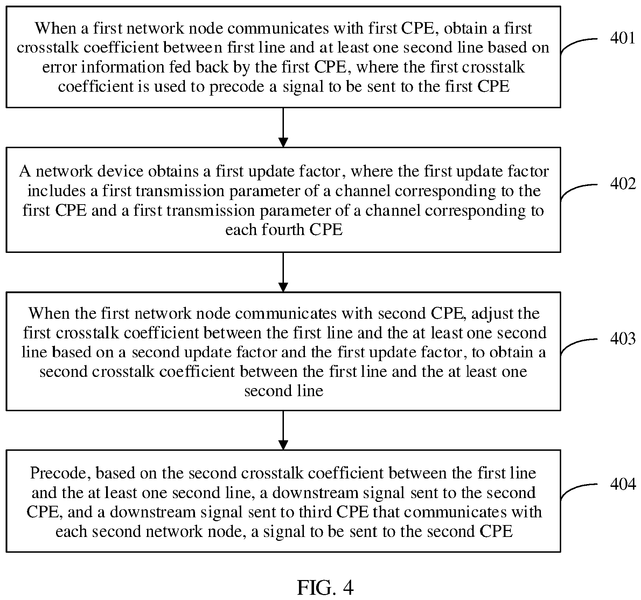

A detailed process of crosstalk signal cancellation in the method in the embodiment shown in FIG. 2-1 is shown as follows. Referring to FIG. 4, a process of the method may include the following steps.

Step 401: When a first network node communicates with first CPE, obtain a first crosstalk coefficient between a first line and at least one second line based on an error signal fed back by the first CPE, where the first crosstalk coefficient is used to precode a signal to be sent to the first CPE.

For a detailed implementation process of this step, refer to related content described in the corresponding step 201. Details are not described herein again.

In the first slot, one CPE that communicates with a second network node is referred to as fourth CPE. Therefore, the first crosstalk coefficient between the first line and the at least one second line includes a crosstalk coefficient of the first CPE to the first CPE and a crosstalk coefficient of each fourth CPE to the first CPE.

For example, in the architecture shown in FIG. 1-1, it is assumed that in a current slot, A1 communicates with the first network node P1, B1 communicates with the second network node P2, C1 communicates with the second network node P3, and D1 communicates with the second network node P4. A first crosstalk coefficient that is between a first line 1 and second lines 2, 3, and 4 and that is obtained by a network device may include a crosstalk coefficient $a_{11}$ of A1 to A1, a crosstalk coefficient $a_{12}$ of B1 to A1, a crosstalk coefficient $a_{13}$ of C1 to A1, and a crosstalk coefficient $a_{14}$ of D1 to A1.

Step 402: The network device obtains a first update factor, where the first update factor includes a first transmission parameter of a channel corresponding to the first CPE and a first transmission parameter of a channel corresponding to each fourth CPE.

Step 401 and step 402 may occur in a same slot, and the two steps are not necessarily performed in sequence. Step 401 may be performed before step 402, or step 402 may be performed before step 401, or step 401 and step 402 may be performed simultaneously.

This step may be implemented by using the following procedures 4021 to 4023, including:

4021: Obtain the first transmission parameter of the channel corresponding to the first CPE.

The network device sends a measurement request to the first CPE on the first line by using the first network node. The first CPE receives the measurement request, obtains a measured value of a TSSi-related parameter based on the measurement request, and sends the measured value of the TSSi-related parameter to the network device on the first line. The network device receives the measured value of the TSSi-related parameter, calculates a TSSi value based on the measured value of the TSSi-related parameter, and calculates a VGA value based on the TSSi value, to obtain the first transmission parameter of the channel corresponding to the first CPE.

4022: For each second network node, obtain the first transmission parameter of the channel corresponding to the fourth CPE that communicates with the second network node.

The network device sends, on the second line by using the second network node, a measurement request to the fourth CPE that communicates with the second network node. The fourth CPE receives the measurement request, obtains a measured value of a TSSi-related parameter based on the measurement request, and sends the measured value of the TSSi-related parameter to the network device on the second line. The network device receives the measured value of the TSSi-related parameter, calculates a TSSi value based on the measured value of the TSSi-related parameter, and calculates a VGA value based on the TSSi value, to obtain the first transmission parameter of the channel corresponding to the fourth CPE.

4023: Generate the first update factor based on the transmission parameter of the channel corresponding to the first CPE and the first transmission parameter of the channel corresponding to each fourth CPE.

Step 403: When the first network node communicates with the second CPE, adjust the first crosstalk coefficient between the first line and the at least one second line based on a second update factor and the first update factor, to obtain a second crosstalk coefficient between the first line and the at least one second line.

The second update factor includes a second transmission parameter of a channel corresponding to the second CPE and a second transmission parameter of a channel corresponding to third CPE that communicates with each second network node. For a process of obtaining the second update factor, refer to the process of obtaining the first update factor. Details are not described herein again.

Specifically, the first crosstalk coefficient between the first line and the at least one second line may be adjusted based on the second update factor and the first update factor by using the following formula (9), to obtain the second crosstalk coefficient between the first line and the at least one second line.

$$P(t_2) = P(t_1) \cdot TxGain(t_2) \cdot \left( TxGain(t_1) \right)^{-1} \quad (9)$$

In the foregoing formula (9), $TxGain(t_1)$ is the first update factor, $TxGain(t_2)$ is the second update factor, $P(t_1)$ is the first crosstalk coefficient, and $P(t_2)$ is the second crosstalk coefficient.

For each second line, a first crosstalk coefficient between the second line, and the first line and the other second lines is also adjusted based on the second update factor and the first update factor, to obtain a second crosstalk coefficient between the second line, and the first line and the other second lines.

For example, $a_{11}$, $a_{11}$, $a_{13}$, and $a_{14}$ included in the first crosstalk coefficient between the first line 1 and the second lines 2, 3, and 4 are adjusted based on the second update factor and the first update factor, to obtain a second crosstalk coefficient between the first line 1 and the second lines 2, 3, and 4, including $a_{21}$, $a_{22}$, $a_{23}$, and $a_{24}$.

For another example, $b_{11}$, $b_{12}$, $b_{13}$, and $b_{14}$ included in a first crosstalk coefficient between the second line 2, and the first line 1 and the second lines 3 and 4 are adjusted based on the second update factor and the first update factor, to obtain a second crosstalk coefficient between the second line 2, and the first line 1 and the second lines 3 and 4, including $b_{21}$, $b_{22}$, $b_{23}$, and $b_{24}$.

Step 404: Precode, based on the second crosstalk coefficient between the first line and the at least one second line, a downstream signal sent to the second CPE, and a downstream signal sent to the third CPE that communicates with each second network node, a signal to be sent to the second CPE.

Specifically, the downstream signal sent to the second CPE and the downstream signal sent to the third CPE that communicates with each second network node are obtained; a crosstalk cancellation signal is generated based on the second crosstalk coefficient between the first line and the at least one second line, the downstream signal sent to the second CPE, and the downstream signal sent to the third CPE that communicates with each second network node; and the signal to be sent to the second CPE is generated based on the crosstalk cancellation signal and the downstream signal of the second CPE. For example, in the current slot, A2 communicates with the first network node P1, B1 communicates with the second network node P2, C2 communicates with the second network node P3, and D3 communicates with the second network node P4. The network device may obtain a downstream signal $X_{A2}$ sent to A2, a downstream signal $X_{B1}$ sent to B1, a downstream signal Xc2 sent to C2, and a downstream signal $X_{D3}$ sent to D3; generate a crosstalk cancellation signal $K_{A2}$ based on the second crosstalk coefficient between the first line 1 and the second lines 2, 3, and 4, and the downstream signals $X_{A2}$, $X_{B1}$, $X_{C2}$, and $X_{D3}$; generate, based on the crosstalk cancellation signal $K_{A2}$ and the downstream signal $X_{A2}$, a signal $H_{A2}$ to be sent to A2; and then send the generated signal $H_{A2}$ to A2 on the first line 1 by using the first network node P1.

For the second line 2, the network device generates a crosstalk cancellation signal $K_{B1}$ based on the second crosstalk coefficient between the second line 2, and the first line 1 and the second lines 3 and 4, and the downstream signals $X_{A2}$, $X_{B1}$, $X_{C2}$, and $X_{D3}$; generates, based on the crosstalk cancellation signal $K_{B1}$ and the downstream signal $X_{B1}$, a signal $H_{B1}$ to be sent to B 1; and then sends the generated signal $H_{B1}$ to B 1 on the second line 2 by using the second network node P2.

For both the second line 3 and the second line 4, a signal to be sent to C2 and a signal to be sent to D3 are generated according to the foregoing method.

Optionally, if power of the signal to be sent to the second CPE exceeds a preset threshold, transmit power of the first network node and receive power of the second CPE may be adjusted, and then the signal is sent to the second CPE on the first line by using the first network node.

In this embodiment of this application, after the first update factor and the first crosstalk coefficient between the first line and the at least one second line are obtained, when the first network node communicates with the second CPE, the first crosstalk coefficient between the first line and the at least one second line is adjusted based on the first update factor and the second update factor, to obtain the second crosstalk coefficient between the first line and the at least one second line; and then the signal to be sent to the second CPE is precoded based on the downstream signal of the second CPE, the downstream signal of the third CPE that communicates with each second network node, and the second crosstalk coefficient between the first line and the at least one second line. Therefore, there is no need to store, in the network device, first crosstalk coefficients corresponding to all the CPEs, so that occupation of storage space is reduced. The crosstalk signal cancellation method in this embodiment is also applicable to a near-end crosstalk cancellation scenario.

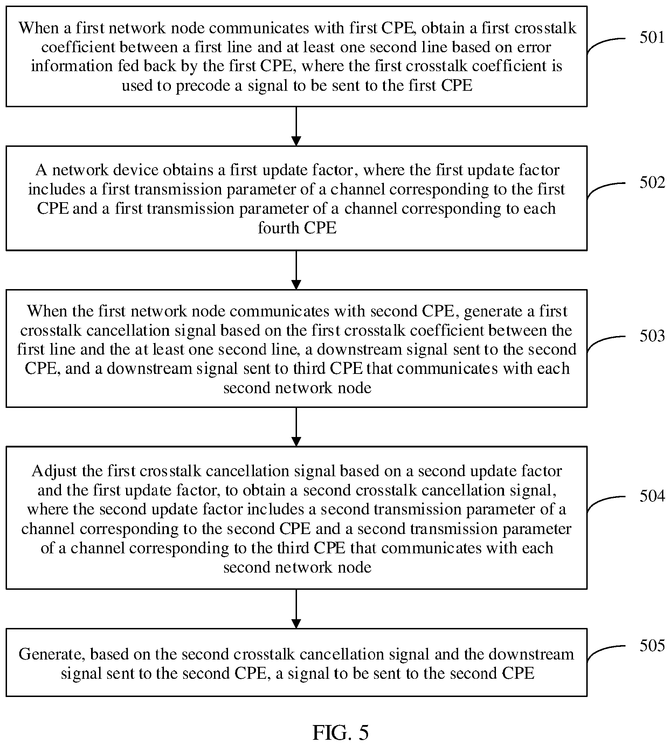

A detailed process of crosstalk signal cancellation in the method in the embodiment shown in FIG. 2-1 is shown as follows. Referring to FIG. 5, a process of the method may include the following steps.

Steps 501 and 502 are the same as steps 401 and 402 respectively, and details are not described herein again.

Step 503: When a first network node communicates with second CPE, generate a first crosstalk cancellation signal based on a first crosstalk coefficient between a first line and at least one second line, a downstream signal sent to second CPE, and a downstream signal sent to third CPE that communicates with each second network node.

It is assumed that P denotes the first crosstalk coefficient between the first line and the at least one second line, and $X(t_2)$ denotes the downstream signal of the second CPE and the downstream signal sent to the third CPE that communicates with each second network node. Therefore, the generated first crosstalk cancellation signal is $K=P \cdot X(t_2)$. The generated first crosstalk cancellation signal corresponds to the second CPE.

For example, in a current slot, A2 communicates with the first network node P1, B1 communicates with the second network node P2, C2 communicates with the second network node P3, and D3 communicates with the second network node P4. It is assumed that a first crosstalk coefficient P(A) between a first line 1 and second lines 2, 3, and 4 includes $a_{11}$, $a_{12}$, $a_{13}$, and $a_{14}$.

A network device may obtain a downstream signal $X_{A2}$ sent to A2, a downstream signal $X_{B1}$ sent to B1, a downstream signal $X_{C2}$ sent to C2, and a downstream signal $X_{D3}$ sent to D3; and generate, based on the first crosstalk coefficient P(A) between the first line 1 and the second lines 2, 3, and 4, and the downstream signals $X_{A2}$, $X_{B1}$, $X_{C2}$, and $X_{D3}$, a first crosstalk cancellation signal corresponding to A2, that is, $K_{A2} = P(A) \cdot X(t_2)$, where $X(t_2)$ includes the downstream signals $X_{A2}$, $X_{B1}$, $X_{C2}$, and $X_{D3}$.

For each third CPE, a first crosstalk cancellation signal corresponding to each third CPE is generated in the foregoing manner of generating the first crosstalk cancellation signal. For example, for B 1, the network device generates, based on a first crosstalk coefficient P(B) between the first line 2, and the first line 1 and the second lines 3 and 4, and the downstream signals $X_{A2}$, $X_{B1}$, $X_{C2}$, and $X_{D3}$, a first crosstalk cancellation signal corresponding to B1, that is, $K_{B1} = P(B) \cdot x(t_2)$, where P(B) includes $b_{11}$, $b_{12}$, $b_{13}$, and $b_{14}$.

A first crosstalk cancellation signal corresponding to C2 and a first crosstalk cancellation signal corresponding to D3 are generated in the same manner.

Step 504: Adjust the first crosstalk cancellation signal based on a second update factor and a first update factor, to obtain a second crosstalk cancellation signal, where the second update factor includes a second transmission parameter of a channel corresponding to the second CPE and a second transmission parameter of a channel corresponding to the third CPE that communicates with each second network node. For a process of obtaining the second update factor, refer to the process of obtaining the first update factor. Details are not described herein again.

Specifically, the first crosstalk cancellation signal corresponding to the second CPE is adjusted based on the second update factor and the first update factor by using the following formula (10), to obtain a second crosstalk cancellation signal corresponding to the second CPE.

$$K^{'}=\text{TxGain}\left(t_2\right)\bullet\left(\text{TxGain}\left(t_1\right)\right)^{-1}\bullet K \qquad (10)$$

In the foregoing formula (10), $\text{TxGain}(t_1)$ is the first update factor, $\text{TxGain}(t_2)$ is the second update factor, and K' is the second crosstalk cancellation signal.

For example, for a first crosstalk cancellation signal $K_{A2}$ corresponding to A2, a second crosstalk cancellation signal $K'_{A2}$ corresponding to A2 is generated by using the foregoing formula (10), and the obtained second crosstalk cancellation signal corresponding to A2 is $K'_{A2}=\text{TxGain}(t_2)\bullet(\text{TxGain}(t_1))^{-1}\bullet K_{A2}$.

For another example, for a first crosstalk cancellation signal $K_{B1}$ corresponding to B 1, a second crosstalk cancellation signal $K'_{B1}$ corresponding to B1 is generated by using the foregoing formula (10), and the obtained second crosstalk cancellation signal corresponding to B1 is $KB_{B1}=\text{TxGain}(t_2)\bullet(\text{TxGain}(t_1))^{-1}\bullet K_{B1}$.

Step 505: Generate, based on the second crosstalk cancellation signal and the downstream signal sent to the second CPE, a signal to be sent to the second CPE.

For example, for A2, a signal to be sent to A2 that is generated based on the second crosstalk cancellation signal $K'_{A2}$ corresponding to A2 and the downstream signal $X_{A2}$ sent to A2 is $K'_{A2} + X_{A2}$. Then, the generated signal is sent to A2 on the first line 1 by using the first network node P1.

For another example, for B1, a signal to be sent to B1 that is generated based on the second crosstalk cancellation signal $K'_{B1}$ corresponding to B1 and the downstream signal $X_{B1}$ sent to B1 is $K'_{B1} + X_{B1}$. Then, the generated signal is sent to B1 on the second line 2 by using the second network node P2.

Optionally, if power of the signal to be sent to the second CPE exceeds a preset threshold, transmit power of the first network node and receive power of the second CPE may be adjusted, and then the signal is sent to the second CPE on the first line by using the first network node.

In this embodiment of this application, after the first update factor and the first crosstalk coefficient between the first line and the at least one second line are obtained, when the first network node communicates with the second CPE, the first crosstalk cancellation signal is generated based on the first crosstalk coefficient, the downstream signal of the second CPE, and the downstream signal of the third CPE that communicates with each second network node; the first crosstalk coefficient is adjusted based on the first update factor and the second update factor, to obtain the second crosstalk coefficient; and then the signal to be sent to the second CPE is generated based on the downstream signal of the second CPE and the second crosstalk cancellation signal. Therefore, there is no need to store, in the network device, first crosstalk coefficients corresponding to all the CPEs, so that occupation of storage space is reduced. The crosstalk signal cancellation method in this embodiment is also applicable to a near-end crosstalk cancellation scenario. An embodiment of this application provides a crosstalk signal cancellation method. The method may be applied to the twisted-pair communications system shown in FIG. 1-1. The twisted-pair communications system includes a first line and at least one second line, the first line connects a first network node and a first user node, and the at least one second line connects at least one second network node and at least one second user node; crosstalk exists between the first line and the at least one second line; the first user node is connected to at least first CPE and second CPE; and the first CPE and the second CPE communicate with the first network node in a time division multiplexing manner.

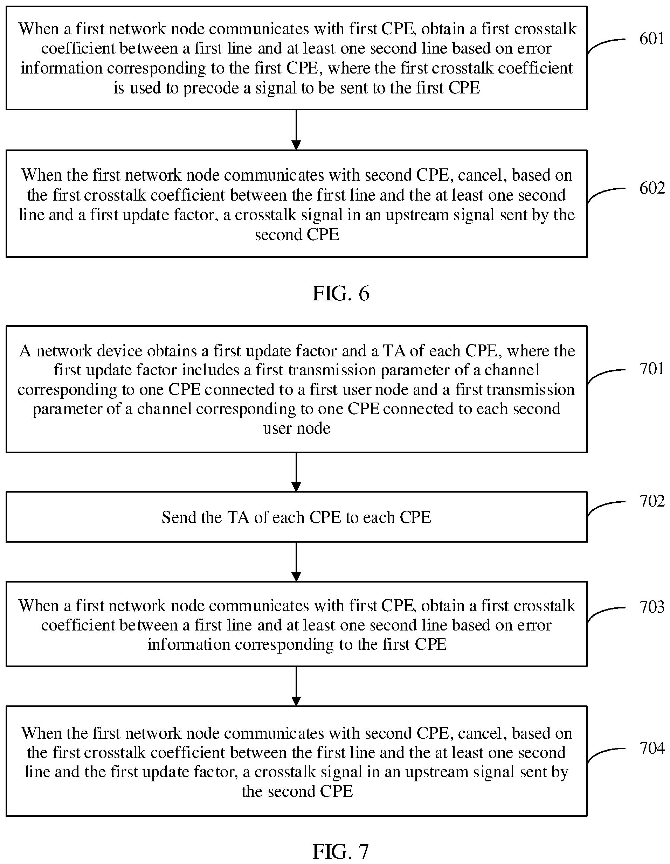

A signal to be canceled in this embodiment of this application may be an upstream signal received by a network device from CPE, and an execution body may be the network device. Referring to FIG. 6, the method may include the following steps. Step 601: When a first network node communicates with first CPE, obtain a first crosstalk coefficient between a first line and at least one second line based on an error signal corresponding to the first CPE, where the first crosstalk coefficient is used to precode a signal to be sent to the first CPE.

For concepts of the first network node, a second network node, the first line, and the second line, refer to related content in step 201. Details are not described herein again. This step may be performed in the first slot after the twisted-pair communications system changes. For ease of description, one CPE that is in the CPEs connected to the first user node and that communicates with the first network node in the first slot is referred to as the first CPE. The first user node is connected to at least the first CPE and the second CPE, and the first CPE and the second CPE may be same CPE or different CPEs. One CPE that communicates with the second network node is referred to as fourth CPE.

This step may be as follows: In the first slot after the twisted-pair communications system changes, the network device may obtain, from the first network node, an error signal corresponding to the first CPE, obtain, from each second network node, an error signal corresponding to fourth CPE that communicates with each second network node, and obtain the first crosstalk coefficient between the first line and the at least one second line based on the error signal corresponding to the first CPE and the error signal corresponding to the fourth CPE that communicates with each second network node. The first crosstalk coefficient between the first line and the at least one second line may include a crosstalk coefficient of the first CPE to the first CPE, and a crosstalk coefficient of each fourth CPE to the first CPE.

In the first slot, when the first CPE is scheduled, the first network node receives a reference signal sent by the first CPE, and obtains, based on the received reference signal, the error signal corresponding to the first CPE. For each second network node and the fourth CPE that communicates with the second network node, the second network node receives a reference signal sent by the fourth CPE, and obtains, based on the received reference signal, the error signal corresponding to the fourth CPE.

For example, in the first slot after the twisted-pair communications system shown in FIG. 1-1 is established, A1 communicates with a first network node P1, B1 communicates with a second network node P2, C1 communicates with a second network node P3, and D1 communicates with a second network node P4. The network device may obtain an error signal corresponding to A1, an error signal corresponding to B1, an error signal corresponding to C1, and an error signal corresponding to D1, and obtain a first crosstalk coefficient between the first line 1 and the second lines 2, 3, and 4 based on the error signal corresponding to A1, the error signal corresponding to B1, the error signal corresponding to C1, and the error signal corresponding to D1. A first crosstalk coefficient between the first line 1 and the second lines 2, 3, and 4 includes a crosstalk coefficient of A1 to A1, a crosstalk coefficient of B1 to A1, a crosstalk coefficient of C1 to A1, and a crosstalk coefficient of D1 to A1.

For each second line, a first crosstalk coefficient between the second line, and the first line and the other second lines is generated in the foregoing manner. The following uses the twisted-pair communications system shown in FIG. 1-1 as an example for detailed description.

For the second line 2, the network device obtains a first crosstalk coefficient between the second line 2, and the first line 1 and the second lines 3 and 4 based on the error signal corresponding to A1, the error signal corresponding to B1, the error signal corresponding to C1, and the error signal corresponding to D1. For the second line 3 and the second line 4, first crosstalk coefficients are both obtained according to the foregoing method.

In the first slot, the first CPE and each fourth CPE may send upstream signals to the network device.

Optionally, a crosstalk signal in an upstream signal sent by CPE may be canceled. For example, for the upstream signal sent by the first CPE, a crosstalk cancellation signal is generated based on the first crosstalk coefficient, the upstream signal sent by the first CPE, and the upstream signal sent by each fourth CPE, and the crosstalk cancellation signal is used to cancel a crosstalk signal in the upstream signal sent by the first CPE. For example, an upstream signal sent by A1 is $X_{A1}$, an upstream signal sent by B1 is $X_{B1}$, an upstream signal sent by C1 is $X_{C1}$, and an upstream signal sent by D1 is $X_{D1}$; a crosstalk cancellation signal $K_{A1}$ is generated based on the first crosstalk coefficient, and the upstream signals $X_{A1}$, $X_{B1}$, $X_{C1}$, and $X_{D1}$; and a crosstalk signal in the upstream signal $X_{A1}$ is canceled based on the crosstalk cancellation signal $K_{A1}$.

For the fourth CPE that performs communication on the second line, a crosstalk signal in the upstream signal sent by the fourth CPE is canceled in the foregoing manner. The following still uses the twisted-pair communications system shown in FIG. 1-1 as an example for detailed description.

For B1, a crosstalk cancellation signal $K_{B1}$ is generated based on the first crosstalk coefficient between the second line 2, and the first line 1 and the second lines 3 and 4, and the upstream signals $X_{A1}$, $X_{B1}$, $X_{C1}$, and $X_{D1}$; and then a crosstalk signal in the upstream signal $X_{B1}$ sent by B1 is canceled by using the crosstalk cancellation signal $K_{B1}$.

For C1 and D1, a crosstalk signal in the upstream signal sent by C1 and a crosstalk signal in the upstream signal sent by D1 are canceled in the foregoing manner. Optionally, referring to FIG. 2-2, in this embodiment, the network device may include a crosstalk cancellation encoding module and a management entity, and each network node includes a scheduling module and a conversion module.

The scheduling module of each network node may schedule CPE connected to a user node corresponding to the network node. The management entity obtains, from the network node, an error signal corresponding to the CPE, obtains a first crosstalk coefficient based on an error signal corresponding to each scheduled CPE, and sends the first crosstalk coefficient to the crosstalk cancellation module.

The conversion module in the network node may receive an upstream signal sent by the CPE, where the upstream signal is a time domain signal; convert the upstream signal into a frequency domain signal; and send the converted upstream signal in a form of the frequency domain signal to the crosstalk cancellation encoding module. The crosstalk cancellation encoding module cancels a crosstalk signal in the upstream signal based on the upstream signal of each scheduled CPE and the first crosstalk coefficient. Optionally, the conversion module of the network node may include a receiving unit, and the conversion module may receive, by using the receiving unit, the upstream signal sent by the CPE, and then convert the upstream signal into a frequency domain signal. Step 602: When the first network node communicates with the second CPE, cancel, based on the first crosstalk coefficient between the first line and the at least one second line and a first update factor, a crosstalk signal in an upstream signal sent by the second CPE.

The first update factor is used to represent a change of the first crosstalk coefficient between the first line and the at least one second line or a change of crosstalk signals generated on the first line and the at least one second line.

The first update factor includes a first transmission parameter of a channel corresponding to one CPE connected to the first user node and a first transmission parameter of a channel corresponding to one CPE connected to each of the at least one second user node. A first transmission parameter of a channel corresponding to CPE may be a time advance (Time Advance, TA) and/or a programmable gain adjuster (Programmable gain adjuster, PGA) value of the CPE, and may further include another parameter, for example, may further include at least one of an SA, a UPBO (Upstream Power Back Off, upstream power back-off parameter), a PCB (Power Cut Back, power cutback parameter), a TSSi, a gain, and a VGA.

The second CPE may be the first CPE or CPE other than the first CPE. The crosstalk signal in the upstream signal sent by the CPE is canceled in any slot after the first crosstalk coefficient between the first line and the at least one second line is obtained. In a current slot, one CPE that communicates with each second network node is referred to as third CPE.

This step may be as follows: The upstream signal sent by the second CPE and an upstream signal sent by the third CPE that communicates with each second network node are received in the current slot; a crosstalk cancellation signal is generated based on the upstream signal sent by the second CPE, the upstream signal sent by each third CPE, the first crosstalk coefficient between the first line and the at least one second line, and the first update factor; and the crosstalk signal in the upstream signal sent by the second CPE is canceled by using the crosstalk cancellation signal.

Optionally, referring to FIG. 2-2, a scheduling module of the first network node may schedule CPE connected to the first user node, namely, the second CPE. A conversion module of the first network node receives the upstream signal sent by the second CPE, converts the upstream signal into a frequency domain signal, and sends the converted upstream signal in a form of the frequency domain signal to a crosstalk cancellation encoding module. The crosstalk cancellation encoding module cancels a crosstalk signal in the upstream signal of the second CPE based on an upstream signal of each scheduled CPE, the first crosstalk coefficient, and the first update factor.

For each second line, a crosstalk signal in an upstream signal sent by each third CPE is canceled in the foregoing manner. The following still uses the twisted-pair communications system shown in FIG. 1-1 as an example for detailed description. For example, in the current slot, A2 communicates with the first network node P1, B1 communicates with the second network node P2, C2 communicates with the second network node P3, and D3 communicates with the second network node P4. The network device may receive an upstream signal $X_{A2}$ sent by A2, an upstream signal $X_{B1}$ sent by B 1, an upstream signal Xc2 sent by C2, and an upstream signal $X_{D3}$ sent by D3; generate a crosstalk cancellation signal $K_{A2}$ based on the first crosstalk coefficient between the first line 1 and the second lines 2, 3, and 4, and the upstream signals $X_{A2}$, $X_{B1}$, $X_{C2}$, and $X_{D3}$; and cancel, by using the crosstalk cancellation signal $K_{A2}$, a crosstalk signal in the upstream signal $X_{A2}$ sent by A2.

For the second line 2, the network device generates a crosstalk cancellation signal $K_{B1}$ based on the first crosstalk coefficient between the second line 2, and the first line 1 and the second lines 3 and 4, and the upstream signals $X_{A2}$, $X_{B1}$, $X_{C2}$, and $X_{D3}$, and cancels, by using the crosstalk cancellation signal $K_{B1}$, a crosstalk signal in the upstream signal $X_{B1}$ sent by B1.

For the second line 3 and the second line 4, a crosstalk signal in the upstream signal sent by C2 and a crosstalk signal in the upstream signal sent by D3 are both canceled according to the foregoing method.

A more detailed implementation process of this embodiment has a plurality of manners. Three instances shown in FIG. 7, FIG. 8, and FIG. 9 are listed in this application, and other instances are not listed one by one. Detailed processes of the three instances are described later.

In this embodiment of this application, after the first crosstalk coefficient between the first line and the at least one second line is obtained, when the first network node communicates with the second CPE, the crosstalk signal in the upstream signal sent by the second CPE needs to be canceled based on only the first update factor and the first crosstalk coefficient between the first line and the at least one second line. Therefore, there is no need to store, in the network device, first crosstalk coefficients corresponding to all the CPEs, so that occupation of storage space is reduced. The crosstalk signal cancellation method in this embodiment is also applicable to a near-end crosstalk cancellation scenario.

A detailed process of crosstalk signal cancellation in the method in the embodiment shown in FIG. 6 is shown as follows. Referring to FIG. 7, a process of the method may include the following steps.

Step 701: A network device obtains a first update factor and a TA of each CPE, where the first update factor includes a first transmission parameter of a channel corresponding to one CPE connected to a first user node and a first transmission parameter of a channel corresponding to one CPE connected to each second user node.

This step may be implemented by using the following procedures 7011 to 7013, including:

7011: The network device obtains a TA of each CPE connected to the first user node and a transmission parameter of a channel corresponding to one CPE connected to the first user node.

The transmission parameter of the channel corresponding to the CPE may include a PGA value of the CPE, and may further include another parameter, for example, may further include at least one of an SA, a UPBO, a PCB, a TSSi, a gain, and a VGA. Specifically, the network device schedules all the CPEs connected to the first user node, and upon scheduling CPE, sends a measurement request to the CPE on a first line by using a first network node. The CPE receives the measurement request, and sends a measurement signal to the network device based on the measurement request. The network device receives the measurement signal, and obtains a PGA value of the CPE based on the measurement signal. The network device obtains, in the foregoing manner, PGA values and measurement signals of all other CPEs connected to the first user node, and selects a PGA value of one CPE from the PGA values all the CPEs connected to the first user node, as a transmission parameter of a channel corresponding to the CPE. The TA of each CPE is obtained based on a reference signal and the measurement signal of each CPE, where the reference signal is a measurement signal of any one of the CPEs. 7012: For each second user node, obtain a TA of each CPE connected to the second user node and a transmission parameter of a channel corresponding to one CPE connected to the second user node.

Specifically, the network device schedules all the CPEs connected to the second user node, and upon scheduling CPE, sends a measurement request to the CPE on a second line by using a second network node. The CPE receives the measurement request, and sends a measurement signal to the network device based on the measurement request. The network device receives the measurement signal, and obtains a PGA value of the CPE based on the measurement signal. The network device obtains, in the foregoing manner, PGA values and measurement signals of all other CPEs connected to the second user node, and selects a PGA value of one CPE from the PGA values all the CPEs connected to the second user node, as a transmission parameter of a channel corresponding to the CPE. The TA of each CPE is obtained based on a reference signal and the measurement signal of each CPE, where the reference signal is a measurement signal of any one of the CPEs.

7013: Generate the first update factor based on the selected transmission parameters of the channels corresponding to the CPEs. In other words, the first update factor includes the selected transmission parameters of the channels corresponding to the CPEs.

Step 702: Send the TA of each CPE to each CPE.

Specifically, for each CPE connected to the first user node, the network device may send, on the first line by using the first network node, the TA of each CPE to each CPE connected to the first user node. For each second user node, the network device may send, on the second line by using the second network node, the TA of each CPE to each CPE connected to the second user node.

For any user node, all CPEs connected to the user node send upstream signals to the network device based on respective TAs. The network device receives the upstream signals of the CPEs, and start locations of the received upstream signals of the CPEs are the same, that is, phases of the received upstream signals of the CPEs are the same. Step 703: When the first network node communicates with first CPE, obtain a first crosstalk coefficient between the first line and at least one second line based on an error signal corresponding to the first CPE.

For a detailed implementation process of this step, refer to related content described in the corresponding step 601. Details are not described herein again.

Step 704: When the first network node communicates with second CPE, cancel, based on the first crosstalk coefficient between the first line and the at least one second line and the first update factor, a crosstalk signal in an upstream signal sent by the second CPE.

In a current slot, the second CPE may send an upstream signal to the network device based on a TA of the second CPE, and third CPE that communicates with each second network node may also send an upstream signal to the network device based on a TA of the third CPE. The network device may receive the upstream signal of the second CPE and the upstream signal of each third CPE.

During actual implementation, this step may be implemented by using the following steps 7041 to 7043, which are as follows:
7041: Adjust the upstream signal of the second CPE based on the first transmission parameter of the channel corresponding to the CPE connected to the first user node, to obtain a target signal of the second CPE.

Optionally, an amplitude of the upstream signal of the second CPE is adjusted based on a PGA value included in the first transmission parameter of the channel corresponding to the CPE connected to the first user node, to obtain the target signal of the second CPE.

For example, in the current slot, A2 communicates with the first network node P1, B1 communicates with the second network node P2, C2 communicates with the second network node P3, and D3 communicates with the second network node P4. The network device may receive an upstream signal $X_{A2}$ sent by A2, and adjust an amplitude of the upstream signal $X_{A2}$ of A2 based on the PGA value included in the first transmission parameter of the channel corresponding to the CPE connected to the first user node, to obtain a target signal $X'_{A2}$ of A2.

7042: For each second user node, adjust, based on the first transmission parameter of the channel corresponding to the CPE connected to the second user node, the upstream signal of the third CPE that communicates with the second network node, to obtain a target signal of the third CPE.

For example, the network device may receive an upstream signal $X_{B1}$ sent by B1, and adjust an amplitude of the upstream signal $X_{B1}$ of B1 based on a PGA value included in a first transmission parameter of a channel corresponding to one CPE connected to a second user node U2, to obtain a target signal $X'_{B1}$ of B1.

For another example, the network device may receive an upstream signal $X_{C2}$ sent by C2, and adjust an amplitude of the upstream signal $X_{C2}$ of C2 based on a PGA value included in a first transmission parameter of a channel corresponding to one CPE connected to a second user node U3, to obtain a target signal $X'_{C2}$ of C2.

For still another example, the network device may receive an upstream signal $X_{D3}$ sent by D3, and adjust, based on a PGA value included in a first transmission parameter of a channel corresponding to one CPE connected to a second user node U4, an amplitude of the upstream signal $X_{D3}$ sent by D3, to obtain a target signal $X'_{D3}$ of D3.

7043: Cancel a crosstalk signal in the target signal of the second CPE based on the first crosstalk coefficient between the first line and the at least one second line, the target signal of the second CPE, and the target signal of the third CPE that communicates with each second network node.

Specifically, a crosstalk cancellation signal is generated based on the first crosstalk coefficient between the first line and the at least one second line, the target signal of the second CPE, and the target signal of the third CPE that communicates with each second network node, and a crosstalk signal in the target signal of the second CPE is canceled by using the crosstalk cancellation signal.

In this step, when the second CPE communicates with the first network node, a crosstalk cancellation signal may also be directly generated based on the first crosstalk coefficient between the first line and the at least one second line, the upstream signal sent by the second CPE, and the upstream signal sent by the third CPE that communicates with each second network node, and a crosstalk signal in the upstream signal sent by the second CPE is canceled by using the crosstalk cancellation signal.

For each second line, a crosstalk signal in an upstream signal of each third CPE is canceled in the foregoing manner. The following still uses the twisted-pair communications system shown in FIG. 1-1 as an example for detailed description. For example, in a current slot, the network device generates a crosstalk cancellation signal $K_{A2}$ based on the first crosstalk coefficient between the first line 1 and the second lines 2, 3, and 4, the target signal $X'_{A2}$ of A2, the target signal $X'_{B1}$ of B1, the target signal $X'_{C2}$ of C2, and the target signal $X'_{D3}$ of D3, and cancels a crosstalk signal in the target signal $X'_{A2}$ of A2 by using the crosstalk cancellation signal $K_{A2}$.

For the second line 2, the network device generates a crosstalk cancellation signal $K_{B1}$ based on a first crosstalk coefficient between the second line 2, and the first line 1 and the second lines 3 and 4, the target signal $X'_{A2}$ of A2, the target signal $X'_{B1}$ of B 1, the target signal $X'_{C2}$ of C2, and the target signal $X'_{D3}$ of D3, and cancels a crosstalk signal in the target signal $X'_{B1}$ of B1 by using the crosstalk cancellation signal $K_{B1}$.

For the second line 3 and the second line 4, a crosstalk signal in the upstream signal of C2 and a crosstalk signal in the upstream signal of D3 are both canceled according to the foregoing method.

In this embodiment of this application, after the first update factor and the first crosstalk coefficient between the first line and the at least one second line are obtained, when the first network node communicates with the second CPE, a downstream signal sent to the second CPE is adjusted based on the first update factor, to obtain the target signal of the second CPE; a downstream signal sent to CPE that communicates with each second network node is adjusted based on the first update factor, to obtain a target signal of the CPE that communicates with each second network node; and then the crosstalk signal in the upstream signal of the second CPE is canceled based on the target signal of the second CPE, the target signal of the CPE that communicates with each second network node, and the first crosstalk coefficient between the first line and the at least one second line. Therefore, there is no need to store, in the network device, first crosstalk coefficients corresponding to all the CPEs, so that occupation of storage space is reduced. The crosstalk signal cancellation method in this embodiment is also applicable to a near-end crosstalk cancellation scenario.

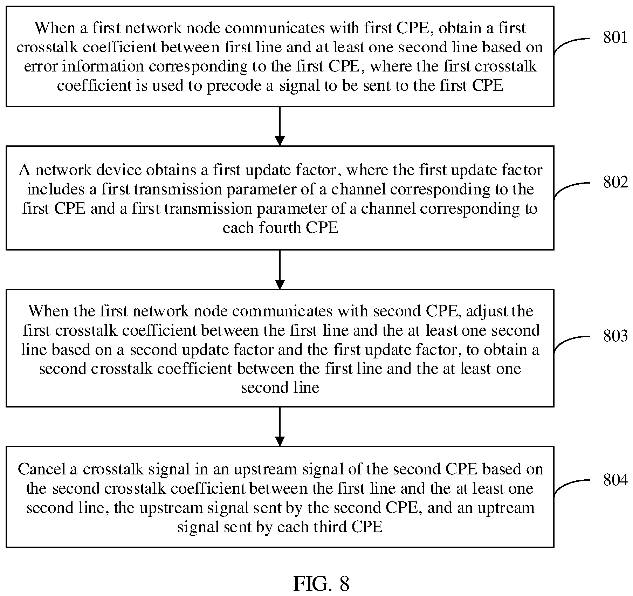

A detailed process of crosstalk signal cancellation in the method in the embodiment shown in FIG. 6 is shown as follows. Referring to FIG. 8, a process of the method may include the following steps.

Step 801: When a first network node communicates with first CPE, obtain a first crosstalk coefficient between a first line and at least one second line based on an error signal corresponding to the first CPE, where the first crosstalk coefficient is used to precode a signal to be sent to the first CPE.

For a detailed implementation process of this step, refer to related content described in the corresponding step 601. Details are not described herein again.

In the first slot, one CPE that communicates with a second network node is referred to as fourth CPE. Therefore, the first crosstalk coefficient between the first line and the at least one second line includes a crosstalk coefficient of the first CPE to the first CPE and a crosstalk coefficient of each fourth CPE to the first CPE.

For example, in the architecture shown in FIG. 1-1, it is assumed that in a current slot, A1 communicates with the first network node P1, B1 communicates with the second network node P2, C1 communicates with the second network node P3, and D1 communicates with the second network node P4. A first crosstalk coefficient that is between a first line 1 and second lines 2, 3, and 4 and that is obtained by a network device may include a crosstalk coefficient $a_{11}$ of A1 to A1, a crosstalk coefficient $a_{12}$ of B1 to A1, a crosstalk coefficient $a_{13}$ of C1 to A1, and a crosstalk coefficient $a_{14}$ of D1 to A1.

Step 802: The network device obtains a first update factor, where the first update factor includes a first transmission parameter of a channel corresponding to the first CPE and a first transmission parameter of a channel corresponding to each fourth CPE.

Step 801 and step 802 may occur in a same slot, and the two steps are not necessarily performed in sequence. Step 801 may be performed before step 802, or step 802 may be performed before step 801, or step 401 and step 402 may be performed simultaneously.

Before this step, the network device obtains a TA of each CPE. For a specific obtaining process, refer to related content in step 701. Details are not described herein again. The first transmission parameter of the channel corresponding to the first CPE includes a TA of the first CPE, and may further include a parameter such as an SA and/or a PGA. The first transmission parameter of the channel corresponding to the fourth CPE includes a TA of the fourth CPE, and may further include a parameter such as an SA and/or a PGA.

Optionally, one PGA may be selected from PGAs of all CPEs connected to a first user node, as a PGA corresponding to the first user node. For each second user node, one PGA may be selected from PGAs of all CPEs connected to a second user node, as a PGA corresponding to the second user node.

Step 803: When the first network node communicates with second CPE, adjust the first crosstalk coefficient between the first line and the at least one second line based on a second update factor and the first update factor, to obtain a second crosstalk coefficient between the first line and the at least one second line.

The second update factor includes a second transmission parameter of a channel corresponding to the second CPE and a second transmission parameter of a channel corresponding to third CPE that communicates with each second network node. The second transmission parameter of the channel corresponding to the second CPE may be a TA of the second CPE, and the second transmission parameter of the channel corresponding to the third CPE is a TA of the third CPE.

Specifically, the first crosstalk coefficient between the first line and the at least one second line may be adjusted based on the second update factor and the first update factor by using the following formula (11), to obtain the second crosstalk coefficient between the first line and the at least one second line.

$$C(t_2) = C(t_1) \cdot RxGain(t_2) \cdot \left( RxGain(t_1) \right)^{-1} \quad (11)$$

In the foregoing formula (11), $RxGain(t_1)$ is the first update factor, $RxGain(t_2)$ is the second update factor, $C(t_1)$ is the first crosstalk coefficient, and $C(t_2)$ is the second crosstalk coefficient.

For each second line, a first crosstalk coefficient between the second line, and the first line and the other second lines is also adjusted based on the second update factor and the first update factor, to obtain a second crosstalk coefficient between the second line, and the first line and the other second lines.

For example, $a_{11}$, $a_{12}$, $a_{13}$, and $a_{14}$ included in the first crosstalk coefficient between the first line 1 and the second lines 2, 3, and 4 are adjusted based on the second update factor and the first update factor, to obtain a second crosstalk coefficient between the first line 1 and the second lines 2, 3, and 4, including $a_{21}$, $a_{22}$, $a_{23}$, and $a_{24}$.

For another example, $b_{11}$, $b_{12}$, $b_{13}$, and $b_{14}$ included in a first crosstalk coefficient between the second line 2, and the first line 1 and the second lines 3 and 4 are adjusted based on the second update factor and the first update factor, to obtain a second crosstalk coefficient between the second line 2, and the first line 1 and the second lines 3 and 4, including $b_{21}$, $b_{22}$, $b_{23}$, and $b_{24}$.

Step 804: Cancel a crosstalk signal in an upstream signal of the second CPE based on the second crosstalk coefficient between the first line and the at least one second line, the upstream signal sent by the second CPE, and an upstream signal sent by each third CPE.

Specifically, the upstream signal sent by the second CPE and an upstream signal sent by third CPE that communicates with each second network node are received; a crosstalk cancellation signal is generated based on the second crosstalk coefficient between the first line and the at least one second line, the upstream signal of the second CPE, and the upstream signal of the third CPE that communicates with each second network node; and the crosstalk signal in the upstream signal of the second CPE is canceled by using the crosstalk cancellation signal.

Optionally, an amplitude of the upstream signal sent by the second CPE may be adjusted based on the PGA corresponding to the first user node, to obtain a target signal of the second CPE. In addition, for each third CPE, an amplitude of the upstream signal sent by the third CPE is adjusted based on the PGA corresponding to the second user node connected to the third CPE, to obtain a target signal of the third CPE. Then, the crosstalk cancellation signal may be generated based on the second crosstalk coefficient between the first line and the at least one second line, the target signal of the second CPE, and the target signal of the third CPE that communicates with each second network node, and the crosstalk signal in the target signal of the second CPE is canceled by using the crosstalk cancellation signal.

For example, in the current slot, A2 communicates with the first network node P1, B1 communicates with the second network node P2, C2 communicates with the second network node P3, and D3 communicates with the second network node P4. The network device may receive an upstream signal $X_{A2}$ sent by A2, an upstream signal $X_{B1}$ sent by B 1, an upstream signal Xc2 sent by C2, and an upstream signal $X_{D3}$ sent by D3; generate a crosstalk cancellation signal $K_{A2}$ based on the second crosstalk coefficient between the first line 1 and the second lines 2, 3, and 4, and the upstream signals $X_{A2}$, $X_{B1}$, $X_{C2}$, and $X_{D3}$; and cancel, by using the crosstalk cancellation signal $K_{A2}$, a crosstalk signal in the upstream signal $X_{A2}$ sent by A2.

For the second line 2, the network device generates a crosstalk cancellation signal $K_{B_1}$ based on the second crosstalk coefficient between the second line 2, and the first line 1 and the second lines 3 and 4, and the upstream signals $X_{A2}$, $X_{B1}$, $X_{C2}$, and $X_{D3}$, and cancels a crosstalk signal in a fourth upstream signal $X_{B1}$ by using the crosstalk cancellation signal $K_{B1}$.

For the second line 3 and the second line 4, a crosstalk signal in the upstream signal of C2 and a crosstalk signal in the upstream signal of D3 are both canceled according to the foregoing method.

In this embodiment of this application, after the first update factor and the first crosstalk coefficient between the first line and the at least one second line are obtained, when the first network node communicates with the second CPE, the first crosstalk coefficient between the first line and the at least one second line is adjusted based on the first update factor and the second update factor, to obtain the second crosstalk coefficient between the first line and the at least one second line; and then the crosstalk signal in the upstream signal of the second CPE is canceled based on the upstream signal of the second CPE, the upstream signal of the third CPE that communicates with each second network node, and the second crosstalk coefficient between the first line and the at least one second line. Therefore, there is no need to store, in the network device, first crosstalk coefficients corresponding to all the CPEs, so that occupation of storage space is reduced. The crosstalk signal cancellation method in this embodiment is also applicable to a near-end crosstalk cancellation scenario.

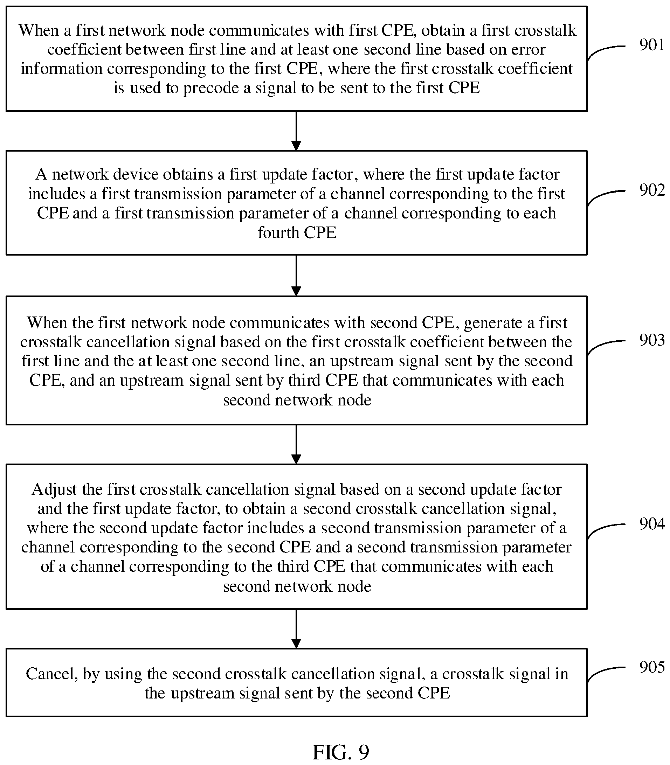

A detailed process of crosstalk signal cancellation in the method in the embodiment shown in FIG. 6 is shown as follows. Referring to FIG. 9, a process of the method may include the following steps.

Step 901 is the same as step 801, and details are not described herein again.

Step 902: A network device obtains a first update factor, where the first update factor includes a first transmission parameter of a channel corresponding to first CPE and a first transmission parameter of a channel corresponding to each fourth CPE.

Step 901 and step 902 may occur in a same slot, and the two steps are not necessarily performed in sequence. Step 901 may be performed before step 902, or step 902 may be performed before step 901, or step 401 and step 402 may be performed simultaneously.

Before this step, the network device obtains a TA and a PGA of each CPE. For a specific obtaining process, refer to related content in step 701. Details are not described herein again. The first transmission parameter of the channel corresponding to the first CPE includes a TA of the first CPE, and may further include a parameter such as an SA and/or a PGA. The first transmission parameter of the channel corresponding to the fourth CPE includes a TA of the fourth CPE, and may further include a parameter such as an SA and/or a PGA.

Optionally, one PGA may be selected from PGAs of all CPEs connected to a first user node, as a PGA corresponding to the first user node. For each second user node, one PGA may be selected from PGAs of all CPEs connected to a second user node, as a PGA corresponding to the second user node.

Step 903: When a first network node communicates with second CPE, generate a first crosstalk cancellation signal based on a first crosstalk coefficient between a first line and at least one second line, an upstream signal sent by the second CPE, and an upstream signal sent by third CPE that communicates with each second network node. It is assumed that C denotes the first crosstalk coefficient between the first line and the at least one second line, and $X(t_2)$ denotes the upstream signal sent by the second CPE and the upstream signal sent by the third CPE that communicates with each second network node. Therefore, the generated first crosstalk cancellation signal is $K = C \cdot X(t_2)$. The generated first crosstalk cancellation signal corresponds to the second CPE.

For example, in the current slot, A2 communicates with the first network node P1, B1 communicates with the second network node P2, C2 communicates with the second network node P3, and D3 communicates with the second network node P4. It is assumed that a first crosstalk coefficient C(A) between a first line 1 and second lines 2, 3, and 4 includes $a_{11}$, $a_{12}$, $a_{13}$, and $a_{14}$.

The network device may receive an upstream signal $X_{A2}$ sent by A2, an upstream signal $X_{B1}$ sent by B 1, an upstream signal $X_{C2}$ sent by C2, and an upstream signal $X_{D3}$ sent by D3; and generate, based on the first crosstalk coefficient C(A) between the first line 1 and the second lines 2, 3, and 4, and the upstream signal $X(t_2)$, a first crosstalk cancellation signal $K_{A2} = C(A) \cdot X(t_2)$ corresponding to A2, where $X(t_2)$ includes the upstream signals $X_{A2}$, $X_{B1}$, $X_{C2}$, and $X_{D3}$.

For each third CPE, a first crosstalk cancellation signal corresponding to each third CPE is generated in the foregoing manner of generating the first crosstalk cancellation signal. For example, for B1, the network device generates, based on a first crosstalk coefficient C(B) between the first line 2, and the first line 1 and the second lines 3 and 4, the upstream signal $X(t_2)$, a first crosstalk cancellation signal $K_{B1} = C(B) \cdot X(t_2)$ corresponding to B1, where C(B) includes b11, $b_{12}$, $b_{13}$, and $b_{14}$.

A first crosstalk cancellation signal corresponding to C2 and a first crosstalk cancellation signal corresponding to D3 are generated in the same manner.

Each upstream signal in $X(t_2)$ may be an adjusted upstream signal, and an adjustment process may be as follows: For an upstream signal sent by any CPE, an amplitude of the upstream signal sent by the CPE is adjusted based on a PGA corresponding to a user node connected to the CPE, and $X(t_2)$ may include an adjusted upstream signal.

Step 904: Adjust the first crosstalk cancellation signal based on a second update factor and the first update factor, to obtain a second crosstalk cancellation signal, where the second update factor includes a second transmission parameter of a channel corresponding to the second CPE and a second transmission parameter of a channel corresponding to the third CPE that communicates with each second network node. The second transmission parameter of the channel corresponding to the second CPE may include a TA of the second CPE, and the second transmission parameter of the channel corresponding to the third CPE may include a TA of the third CPE. Specifically, the first crosstalk cancellation signal corresponding to the second CPE is adjusted based on the second update factor and the first update factor by using the following formula (12), to obtain a second crosstalk cancellation signal corresponding to the second CPE.

$$ K^{'} = \mathrm{RxGain}\left(t_2\right) \cdot \left(\mathrm{RxGain}\left(t_1\right)\right)^{-1} \cdot K \quad (12) $$

In the foregoing formula (12), $\mathrm{RxGain}(t_1)$ is the first update factor, $\mathrm{RxGain}(t_2)$ is the second update factor, and K' is the second crosstalk cancellation signal.

For example, the first crosstalk cancellation signal $K_{A2}$ corresponding to A2 is adjusted by using the foregoing formula (12), to obtain a second crosstalk cancellation signal corresponding to $_{A2}$, that is, $K^{'}_{A2}$ $= \mathrm{RxGain}(t_2) \cdot (\mathrm{RxGain}(t_1))^{-1} \cdot K_{A2}$ .

For another example, the first crosstalk cancellation signal $K_{B1}$ corresponding to B1 is generated by using the foregoing formula (10), to obtain a second crosstalk cancellation signal corresponding to B1, that is, $K_{B1} = \mathrm{RxGain}(t_2) \cdot (\mathrm{RxGain}(t_1))^{-1} \cdot K_{B1}$.

Step 905: Cancel, by using the second crosstalk cancellation signal, a crosstalk signal in the upstream signal sent by the second CPE.

For example, for A2, a crosstalk signal in the upstream signal $X_{A2}$ sent by A2 is canceled by using the second crosstalk cancellation signal $K^{'}_{A2}$ corresponding to A2. For another example, for B1, a crosstalk signal in the upstream signal $X_{B1}$ sent by B1 is canceled by using the second crosstalk cancellation signal $K^{'}_{B1}$ corresponding to B1.

In this embodiment of this application, after the first update factor and the first crosstalk coefficient between the first line and the at least one second line are obtained, when the first network node communicates with the second CPE, the first crosstalk cancellation signal is generated based on the first crosstalk coefficient, the upstream signal of the second CPE, and the upstream signal of the third CPE that communicates with each second network node; the first crosstalk cancellation coefficient is adjusted based on the first update factor and the second update factor, to obtain a second crosstalk cancellation coefficient; and then the crosstalk signal in the upstream signal sent by the second CPE is canceled based on the upstream signal of the second CPE and the second crosstalk cancellation signal. Therefore, there is no need to store, in the network device, first crosstalk coefficients corresponding to all the CPEs, so that occupation of storage space is reduced. The crosstalk signal cancellation method in this embodiment is also applicable to a near-end crosstalk cancellation scenario.

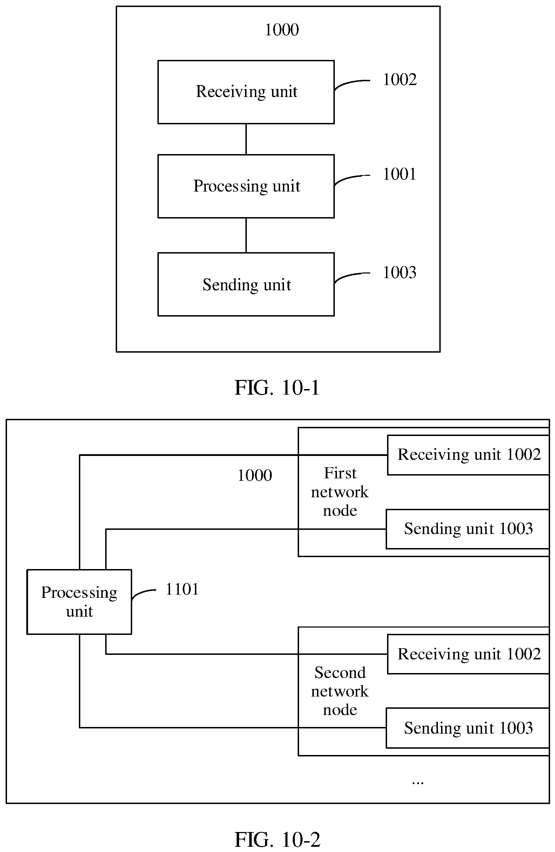

Referring to FIG. 10-1, an embodiment of this application provides a crosstalk signal cancellation apparatus 1000. The apparatus may be the network device or a part of the network device in the embodiments shown in FIG. 1-1, FIG. 2-1, FIG. 2-2, FIG. 3, FIG. 4, FIG. 5, FIG. 6, FIG. 7, FIG. 8, or FIG. 9.

The apparatus 1000 includes a processing unit 1001. The processing unit 1001 may include the management entity and/or the crosstalk cancellation encoding module in the network device shown in FIG. 2-2, and may be connected to the first network node and the at least one second network node in the network device, to implement functions of the management entity and/or the crosstalk cancellation encoding module.

Optionally, referring to FIG. 10-2, the apparatus 1000 further includes a first network node and at least one second network node. For any one of the first network node and the at least one second network node, the network node may include a receiving unit 1002 and a sending unit 1003. The processing unit 1001 may be connected to the receiving unit 1002 and the sending unit 1003 in the network node. The receiving unit 1002 and the sending unit 1003 may be respectively the receiving unit and the sending unit that are included in the conversion module in the network device shown in FIG. 2-2.

The apparatus 1000 is applied to a twisted-pair communications system, the twisted-pair communications system includes a first line and at least one second line, the first line connects a first network node and a first user node, and the at least one second line connects at least one second network node and at least one second user node; crosstalk exists between the first line and the at least one second line; the first user node is connected to at least first customer-premises equipment CPE and second CPE; and the first CPE and the second CPE communicate with the first network node in a time division multiplexing manner.

The processing unit 1001 is configured to: when the first network node communicates with the first CPE, obtain a first crosstalk coefficient between the first line and the at least one second line based on an error signal fed back by the first CPE, where the first crosstalk coefficient is used to precode a signal to be sent to the first CPE.

The processing unit 1001 is further configured to: when the first network node communicates with the second CPE, precode, based on the first crosstalk coefficient between the first line and the at least one second line and a first update factor, a signal to be sent to the second CPE, where the first update factor is used to represent a change of the first crosstalk coefficient between the first line and the at least one second line or a change of crosstalk signals generated on the first line and the at least one second line. Optionally, the first update factor includes a first transmission parameter of a channel corresponding to one CPE connected to the first user node and a first transmission parameter of a channel corresponding to one CPE connected to each of the at least one second user node.

Optionally, the processing unit 1001 may receive, by using the receiving unit 1002 in the first network node, the error signal fed back by the first CPE.

Optionally, that the processing unit 1001 performs the operation of precoding, based on the first crosstalk coefficient between the first line and the at least one second line and a first update factor, a signal to be sent to the second CPE includes:

adjusting, based on the first transmission parameter of the channel corresponding to the CPE connected to the first user node, a downstream signal sent to the second CPE, to obtain a target signal of the second CPE;

adjusting, based on the first transmission parameter of the channel corresponding to the CPE connected to each second user node, a downstream signal sent to third CPE that communicates with each of the at least one second network node, to obtain a target signal of the third CPE that communicates with each second network node; and

precoding, based on the first crosstalk coefficient between the first line and the at least one second line, the target signal of the second CPE, and the target signal of the third CPE that communicates with each second network node, the signal to be sent to the second CPE.

Optionally, that the processing unit 1001 performs the operation of precoding, based on the first crosstalk coefficient between the first line and the at least one second line and a first update factor, a signal to be sent to the second CPE includes:

adjusting the first crosstalk coefficient between the first line and the at least one second line based on a second update factor and the first update factor, to obtain a second crosstalk coefficient between the first line and the at least one second line, where the second update factor includes a second transmission parameter of a channel corresponding to the second CPE and a second transmission parameter of a channel corresponding to third CPE that communicates with each second network node; and

precoding, based on the second crosstalk coefficient between the first line and the at least one second line, a downstream signal sent to the second CPE, and a downstream signal sent to the third CPE that communicates with each second network node, the signal to be sent to the second CPE.

Optionally, that the processing unit 1001 performs the operation of precoding, based on the first crosstalk coefficient between the first line and the at least one second line and a first update factor, a signal to be sent to the second CPE includes:

generating a first crosstalk cancellation signal based on the first crosstalk coefficient between the first line and the at least one second line, a downstream signal sent to the second CPE, and a downstream signal sent to third CPE that communicates with each second network node;

adjusting the first crosstalk cancellation signal based on a second update factor and the first update factor, to obtain a second crosstalk cancellation signal, where the second update factor includes a second transmission parameter of a channel corresponding to the second CPE and a second transmission parameter of a channel corresponding to a third CPE that communicates with each second network node; and

generating, based on the second crosstalk cancellation signal and the downstream signal sent to the second CPE, the signal to be sent to the second CPE.

Optionally, the processing unit 1001 is further configured to: when the first network node communicates with the second CPE, cancel, based on the first crosstalk coefficient between the first line and the at least one second line and the first update factor, a crosstalk signal in an upstream signal sent by the second CPE.

Optionally, that the processing unit 1001 performs the operation of canceling, based on the first crosstalk coefficient between the first line and the at least one second line and the first update factor, a crosstalk signal in an upstream signal sent by the second CPE includes:

adjusting, based on the first transmission parameter of the channel corresponding to the CPE connected to the first user node, the upstream signal sent by the second CPE, to obtain the target signal of the second CPE; adjusting, based on the first transmission parameter of the channel corresponding to the CPE connected to each second user node, an upstream signal sent by the third CPE that communicates with each of the at least one second network node, to obtain the target signal of the third CPE that communicates with each second network node; and canceling a crosstalk signal in the target signal of the second CPE based on the first crosstalk coefficient between the first line and the at least one second line, the target signal of the second CPE, and the target signal of the third CPE that communicates with each second network node.

Optionally, the receiving unit 1002 is configured to receive measurement signals sent by all CPEs connected to a target user node, where the target user node is any user node in the twisted-pair communications system;

the processing unit 1001 is further configured to obtain timing advances TAs of the CPEs based on the measurement signals of the CPEs and a reference signal, where the reference signal is a measurement signal of any one of the CPEs; and
the sending unit 1003 is configured to send the TAs of the CPEs to the CPEs respectively, so that the CPEs each send an upstream signal based on the respective TAs.

Optionally, that the processing unit 1001 performs the operation of canceling, based on the first crosstalk coefficient between the first line and the at least one second line and the first update factor, a crosstalk signal in an upstream signal sent by the second CPE includes:

adjusting the first crosstalk coefficient between the first line and the at least one second line based on the second update factor and the first update factor, to obtain the second crosstalk coefficient between the first line and the at least one second line, where the second update factor includes the second transmission parameter of the channel corresponding to the second CPE and the second transmission parameter of the channel corresponding to the third CPE that communicates with each second network node; and
canceling, based on the second crosstalk coefficient between the first line and the at least one second line, the upstream signal sent by the second CPE, and an upstream signal sent by the third CPE that communicates with each second network node, the crosstalk signal in the upstream signal sent by the second CPE.

Optionally, that the processing unit 1001 performs the operation of canceling, based on the first crosstalk coefficient between the first line and the at least one second line and the first update factor, a crosstalk signal in an upstream signal sent by the second CPE includes:

generating the first crosstalk cancellation signal based on the first crosstalk coefficient between the first line and the at least one second line, the upstream signal sent by the second CPE, and an upstream signal sent by the third CPE that communicates with each second network node;
adjusting the first crosstalk cancellation signal based on the second update factor and the first update factor, to obtain the second crosstalk cancellation signal, where the second update factor includes the second transmission parameter of the channel corresponding to the second CPE and the second transmission parameter of the channel corresponding to the third CPE that communicates with each second network node; and
canceling, based on the second crosstalk cancellation signal, the crosstalk signal in the upstream signal sent by the second CPE.

Optionally, the processing unit 1001 is further configured to: obtain a transmission parameter of a channel corresponding to one CPE connected to the first user node and a transmission parameter of a channel corresponding to one CPE connected to each second user node, and generate the first update factor based on the obtained transmission parameters of the channels corresponding to the CPEs.

Optionally, the processing unit 1001 is further configured to: when the first network node communicates with the first CPE, obtain a transmission parameter of a channel corresponding to the first CPE and a transmission parameter of a channel corresponding to CPE that communicates with each of the at least one second network node, and form the first update factor by using the transmission parameter of the channel corresponding to the first CPE and the transmission parameter of the channel corresponding to the CPE that communicates with each second network node.

Optionally, the processing unit 1001 is further configured to: when the first network node communicates with the first CPE again, cancel a crosstalk signal in a signal of the first CPE based on the first crosstalk coefficient between the first line and the at least one second line and the first update factor.

In this embodiment of this application, after the first crosstalk coefficient between the first line and the at least one second line is obtained, when the first network node communicates with the second CPE, a crosstalk signal generated on the first line by the twisted-pair communications system can be canceled based on only the first update factor and the first crosstalk coefficient between the first line and the at least one second line. Therefore, there is no need to store, in the network device, first crosstalk coefficients corresponding to all the CPEs, so that occupation of storage space is reduced. The crosstalk signal cancellation method in this embodiment is also applicable to a near-end crosstalk cancellation scenario.

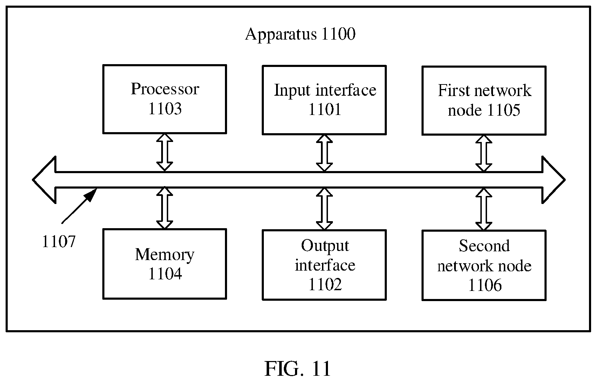

FIG. 11 is another schematic diagram of a crosstalk signal cancellation apparatus 1100 according to an embodiment of this application. The apparatus 1100 may be an application-specific integrated circuit, one or more field-programmable gate arrays (Field-Programmable Gate Array, FPGA), or a programmable logic device (Programmable Logic Device, PLD), a controller, a state machine, a gate logic, a discrete hardware component, any other suitable circuit, or any combination of circuits, a chip, a board, a communications device, or the like that can perform various functions described throughout the present invention.

The apparatus 1100 is configured into the network device in the embodiment shown in FIG. 1-1, FIG. 2-1, FIG. 3, FIG. 4, FIG. 5, FIG. 6, FIG. 7, FIG. 8, or FIG. 9, or into the apparatus in the embodiment shown in FIG. 10-1, and may be configured to perform the operations performed by the network device in the method in FIG. 2-1, FIG. 3, FIG. 4, FIG. 5, FIG. 6, FIG. 7, FIG. 8, or FIG. 9. As shown in FIG. 11, the apparatus 1100 includes an input interface 1101, an output interface 1102, a processor 1103, a memory 1104, a first network node 1105, and at least one second network node 1106. The input interface 1101, the output interface 1102, the processor 1103, the memory 1104, the first network node 1105, and the at least one second network node 1106 may be connected by using a bus system 1107.

The memory 1104 is configured to store a program, an instruction, or code. The processor 1103 is configured to execute the program, the instruction, or the code in the memory 1104, to control the input interface 1101 to receive a signal, control the output interface 1102 to send a signal, and implement the steps and functions implemented by the network device in the implementation corresponding to FIG. 2-1, FIG. 3, FIG. 4, FIG. 5, FIG. 6, FIG. 7, FIG. 8, or FIG. 9. Details are not described herein again. For specific implementations of the input interface 1101, the processor 1103, and the output interface 1102, refer correspondingly to detailed descriptions of the receiving unit 1002, the processing unit 1001, and the sending unit 1003 in FIG. 10-1. Details are not described herein again.

The sequence numbers of the foregoing embodiments of this application are merely for illustrative purposes, and are not intended to indicate priorities of the embodiments.

A person of ordinary skill in the art may understand that all or some of the steps of the embodiments may be implemented by hardware or a program instructing related hardware. The program may be stored in a computer-readable storage medium. The storage medium may include: a read-only memory, a magnetic disk, or an optical disc.

## Claims

1. A crosstalk signal cancellation method, wherein the method is applied to a twisted-pair communications system, the twisted-pair communications system comprises a first line and at least one second line, the first line connects a first network node and a first user node, and the at least one second line connects at least one second network node and at least one second user node; crosstalk exists between the first line and the at least one second line; the first user node is connected to at least first customer-premises equipment, CPE, and second CPE; and the first CPE and the second CPE communicate with the first network node in a time division multiplexing manner; wherein the method comprises:

when the first network node communicates with the first CPE, obtaining a first crosstalk coefficient between the first line and the at least one second line based on an error signal fed back by the first CPE, wherein the first crosstalk coefficient is used to precode a signal to be sent to the first CPE; and
when the first network node communicates with the second CPE, precoding, based on the first crosstalk coefficient between the first line and the at least one second line and a first update factor, a signal to be sent to the second CPE, wherein the first update factor is used to represent a change of the first crosstalk coefficient between the first line and the at least one second line or a change of crosstalk signals generated on the first line and the at least one second line;
**characterized in that**
the first update factor comprises a first transmission parameter of a channel corresponding to one CPE connected to the first user node and a first transmission parameter of a channel corresponding to one CPE connected to each of the at least one second user node; and
wherein the precoding, based on the first crosstalk coefficient between the first line and the at least one second line and a first update factor, a signal to be sent to the second CPE comprises:

adjusting, based on the first transmission parameter of the channel corresponding to the CPE connected to the first user node, a downstream signal sent to the second CPE, to obtain a target signal of the second CPE;

adjusting, based on the first transmission parameter of the channel corresponding to the CPE connected to each second user node, a downstream signal sent to third CPE that communicates with each of the at least one second network node, to obtain a target signal of the third CPE that communicates with each second network node; and

precoding, based on the first crosstalk coefficient between the first line and the at least one second line, the target signal of the second CPE, and the target signal of the third CPE that communicates with each second network node, the signal to be sent to the second CPE.

2. The method according to claim 1, wherein the precoding, based on the first crosstalk coefficient between the first line and the at least one second line and a first update factor, a signal to be sent to the second CPE comprises:

adjusting the first crosstalk coefficient between the first line and the at least one second line based on a second update factor and the first update factor, to obtain a second crosstalk coefficient between the first line and the at least one second line, wherein the second update factor comprises a second transmission parameter of a channel corresponding to the second CPE and a second transmission parameter of a channel corresponding to third CPE that communicates with each second network node; and

precoding, based on the second crosstalk coefficient between the first line and the at least one second line, a downstream signal sent to the second CPE, and a downstream signal sent to the third CPE that communicates with each second network node, the signal to be sent to the second CPE.

3. The method according to claim 1, wherein the precoding, based on the first crosstalk coefficient between the first line and the at least one second line and a first update factor, a signal to be sent to the second CPE comprises:

generating a first crosstalk cancellation signal based on the first crosstalk coefficient between the first line and the at least one second line, a downstream signal sent to the second CPE, and a downstream signal sent to third CPE that communicates with each second network node;

adjusting the first crosstalk cancellation signal based on a second update factor and the first update factor, to obtain a second crosstalk cancellation signal, wherein the second update factor comprises a second transmission parameter of a channel corresponding to the second CPE and a second transmission parameter of a channel corresponding to third CPE that communicates with each second network node; and

generating, based on the second crosstalk cancellation signal and the downstream signal sent to the second CPE, the signal to be sent to the second CPE.

4. The method according to any one of claims 1 to 3, wherein the method further comprises:
when the first network node communicates with the second CPE, canceling, based on the first crosstalk coefficient between the first line and the at least one second line and the first update factor, a crosstalk signal in an upstream signal sent by the second CPE.

5. The method according to claim 4, wherein the canceling, based on the first crosstalk coefficient between the first line and the at least one second line and the first update factor, a crosstalk signal in an upstream signal sent by the second CPE comprises:

adjusting, based on the first transmission parameter of the channel corresponding to the CPE connected to the first user node, the upstream signal sent by the second CPE, to obtain the target signal of the second CPE;

adjusting, based on the first transmission parameter of the channel corresponding to the CPE connected to each second user node, an upstream signal sent by the third CPE that communicates with each of the at least one second network node, to obtain the target signal of the third CPE that communicates with each second network node; and

canceling a crosstalk signal in the target signal of the second CPE based on the first crosstalk coefficient between the first line and the at least one second line, the target signal of the second CPE, and the target signal of the third CPE that communicates with each second network node.

6. The method according to claim 4, wherein the canceling, based on the first crosstalk coefficient between the first line and the at least one second line and the first update factor, a crosstalk signal in an upstream signal sent by the second CPE comprises:

adjusting the first crosstalk coefficient between the first line and the at least one second line based on the second update factor and the first update factor, to obtain the second crosstalk coefficient between the first line and the at least one second line, wherein the second update factor comprises the second transmission parameter of the channel corresponding to the second CPE and the second transmission parameter of the channel corresponding to the third CPE that communicates with each second network node; and

canceling, based on the second crosstalk coefficient between the first line and the at least one second line, the upstream signal sent by the second CPE, and an upstream signal sent by the third CPE that communicates with each second network node, the crosstalk signal in the upstream signal sent by the second CPE.

7. The method according to claim 4, wherein the canceling, based on the first crosstalk coefficient between the first line and the at least one second line and the first update factor, a crosstalk signal in an upstream signal sent by the second CPE comprises:

generating the first crosstalk cancellation signal based on the first crosstalk coefficient between the first line and the at least one second line, the upstream signal sent by the second CPE, and an upstream signal sent by the third CPE that communicates with each second network node;

adjusting the first crosstalk cancellation signal based on the second update factor and the first update factor, to obtain the second crosstalk cancellation signal, wherein the second update factor comprises the second transmission parameter of the channel corresponding to the second CPE and the second transmission parameter of the channel corresponding to the third CPE that communicates with each second network node; and

canceling, based on the second crosstalk cancellation signal, the crosstalk signal in the upstream signal sent by the second CPE.

8. A crosstalk signal cancellation apparatus (1000), wherein the apparatus (1000) comprises a processing unit (1001) and is applied to a twisted-pair communications system, the twisted-pair communications system comprises a first line and at least one second line, the first line connects a first network node and a first user node, and the at least one second line connects at least one second network node and at least one second user node; crosstalk exists between the first line and the at least one second line; the first user node is connected to at least first customer-premises equipment, CPE, and second CPE; and the first CPE and the second CPE communicate with the first network node in a time division multiplexing manner; wherein

the processing unit (1001) is configured to: when the first network node communicates with the first CPE, obtain a first crosstalk coefficient between the first line and the at least one second line based on an error signal fed back by the first CPE, wherein the first crosstalk coefficient is used to precode a signal to be sent to the first CPE; and

the processing unit (1001) is further configured to: when the first network node communicates with the second CPE, precode, based on the first crosstalk coefficient between the first line and the at least one second line and a first update factor, a signal to be sent to the second CPE, wherein the first update factor is used to represent a change of the first crosstalk coefficient between the first line and the at least one second line or a change of crosstalk signals generated on the first line and the at least one second line,

**characterized in that**

the first update factor comprises a first transmission parameter of a channel corresponding to one CPE connected to the first user node and a first transmission parameter of a channel corresponding to one CPE connected to each of the at least one second user node; and

wherein the processing unit (1001) is further configured to:

adjust, based on the first transmission parameter of the channel corresponding to the CPE connected to the first user node, a downstream signal sent to the second CPE, to obtain a target signal of the second CPE;

adjust, based on the first transmission parameter of the channel corresponding to the CPE connected to each second user node, a downstream signal sent to third CPE that communicates with each of the at least one second network node, to obtain a target signal of the third CPE that communicates with each second network node; and

precode, based on the first crosstalk coefficient between the first line and the at least one second line, the target signal of the second CPE, and the target signal of the third CPE that communicates with each second network node, the signal to be sent to the second CPE.

9. The apparatus (1000) according to claim 8, wherein that the processing unit (1001) performs the operation of precoding, based on the first crosstalk coefficient between the first line and the at least one second line and a first update factor, a signal to be sent to the second CPE comprises:

adjusting the first crosstalk coefficient between the first line and the at least one second line based on a second update factor and the first update factor, to obtain a second crosstalk coefficient between the first line and the at least one second line, wherein the second update factor comprises a second transmission parameter of a channel corresponding to the second CPE and a second transmission parameter of a channel corresponding to third CPE that communicates with each second network node; and

precoding, based on the second crosstalk coefficient between the first line and the at least one second line, a downstream signal sent to the second CPE, and a downstream signal sent to the third CPE that communicates with each second network node, the signal to be sent to the second CPE.

10. The apparatus (1000) according to claim 8, wherein that the processing unit (1001) performs the operation of precoding, based on the first crosstalk coefficient between the first line and the at least one second line and a first update factor, a signal to be sent to the second CPE comprises:

generating a first crosstalk cancellation signal based on the first crosstalk coefficient between the first line and the at least one second line, a downstream signal sent to the second CPE, and a downstream signal sent to third CPE that communicates with each second network node;

adjusting the first crosstalk cancellation signal based on a second update factor and the first update factor, to obtain a second crosstalk cancellation signal, wherein the second update factor comprises a second transmission parameter of a channel corresponding to the second CPE and a second transmission parameter of a channel corresponding to third CPE that communicates with each second network node; and

generating, based on the second crosstalk cancellation signal and the downstream signal sent to the second CPE, the signal to be sent to the second CPE.

11. A twisted-pair communications system, wherein the twisted-pair communications system comprises the apparatus (1000) according to any one of claims 8 to 10.

**Patentansprüche**

1. Verfahren zur Unterdrückung von Übersprechsignalen, wobei das Verfahren auf ein Twisted-Pair-Kommunikationssystem angewandt wird, wobei das Twisted-Pair-Kommunikationssystem eine erste Leitung und mindestens eine zweite Leitung umfasst, wobei die erste Leitung einen ersten Netzknoten und einen ersten Benutzerknoten verbindet, und wobei die mindestens eine zweite Leitung mindestens einen zweiten Netzknoten und mindestens einen zweiten Benutzerknoten verbindet; wobei es Übersprechen zwischen der ersten Leitung und der mindestens einen zweiten Leitung gibt; wobei der erste Benutzerknoten mit mindestens einer ersten kundenseitigen Ausrüstung (customer-premises equipment - CPE) und einer zweiten CPE verbunden ist; und wobei die erste CPE und die zweite CPE mit dem ersten Netzknoten in einer Zeitmultiplex-Weise kommunizieren; wobei das Verfahren Folgendes umfasst:

wenn der erste Netzknoten mit der ersten CPE kommuniziert, Erhalten eines ersten Übersprechkoeffizienten zwischen der ersten Leitung und der mindestens einen zweiten Leitung basierend auf einem Fehlersignal, das durch die erste CPE rückgekoppelt wird, wobei der erste Übersprechkoeffizient verwendet wird, um ein Signal vorzucodieren, das an die erste CPE zu senden ist; und

wenn der erste Netzknoten mit der zweiten CPE kommuniziert, Vorcodieren eines Signals, das an die zweite CPE zu senden ist, basierend auf dem ersten Übersprechkoeffizienten zwischen der ersten Leitung und der mindestens einen zweiten Leitung und einem ersten Aktualisierungsfaktor, wobei der erste Aktualisierungsfaktor verwendet wird, um eine Änderung des ersten Übersprechkoeffizienten zwischen der ersten Leitung und der mindestens einen zweiten Leitung oder eine Änderung von Übersprechsignalen darzustellen, die auf der ersten Leitung und der mindestens einen zweiten Leitung erzeugt werden;

**dadurch gekennzeichnet, dass**

der erste Aktualisierungsfaktor einen ersten Übertragungsparameter eines Kanals, der einer CPE entspricht, die mit dem ersten Benutzerknoten verbunden ist, und einen ersten Übertragungsparameter eines Kanals umfasst, der einer CPE entspricht, die mit jedem von dem mindestens einen zweiten Benutzerknoten verbunden ist; und

wobei das Vorcodieren eines Signals, das an die zweite CPE zu senden ist, basierend auf dem ersten Übersprechkoeffizienten zwischen der ersten Leitung und der mindestens einen zweiten Leitung und einem ersten Aktualisierungsfaktor Folgendes umfasst:

Anpassen eines Downstream-Signals, das an die zweite CPE gesendet wird, basierend auf dem ersten Übertragungsparameter des Kanals, welcher der CPE entspricht, die mit dem ersten Benutzerknoten verbunden ist, um ein Zielsignal der zweiten CPE zu erhalten;

Anpassen eines Downstream-Signals, das an die dritte CPE gesendet wird, die mit jedem von dem mindestens einen zweiten Netzknoten kommuniziert, basierend auf dem ersten Übertragungsparameter des Kanals, welcher der CPE entspricht, die mit jedem zweiten Benutzerknoten verbunden ist, um ein Zielsignal der dritten CPE zu erhalten, die mit jedem zweiten Netzknoten kommuniziert; und

Vorcodieren des Signals, das an die zweite CPE zu senden ist, basierend auf dem ersten Übersprechkoeffizienten zwischen der ersten Leitung und der mindestens einen zweiten Leitung, dem Zielsignal der zweiten CPE und dem Zielsignal der dritten CPE, die mit jedem zweiten Netzknoten kommuniziert.

2. Verfahren nach Anspruch 1, wobei das Vorcodieren eines Signals, das an die zweite CPE zu senden ist, basierend auf dem ersten Übersprechkoeffizienten zwischen der ersten Leitung und der mindestens einen zweiten Leitung und einem ersten Aktualisierungsfaktor Folgendes umfasst:

Anpassen des ersten Übersprechkoeffizienten zwischen der ersten Leitung und der mindestens einen zweiten Leitung basierend auf einem zweiten Aktualisierungsfaktor und dem ersten Aktualisierungsfaktor, um einen zweiten Übersprechkoeffizienten zwischen der ersten Leitung und der mindestens einen zweiten Leitung zu erhalten, wobei der zweite Aktualisierungsfaktor einen zweiten Übertragungsparameter eines Kanals, welcher der zweiten CPE entspricht, und einen zweiten Übertragungsparameter eines Kanals umfasst, welcher der dritten CPE entspricht, die mit jedem zweiten Netzknoten kommuniziert; und

Vorcodieren des Signals, das an die zweite CPE zu senden ist, basierend auf dem zweiten Übersprechkoeffizienten zwischen der ersten Leitung und der mindestens einen zweiten Leitung, einem Downstream-Signal, das an die zweite CPE gesendet wird, und einem Downstream-Signal, das an die dritte CPE gesendet wird, die mit jedem zweiten Netzknoten kommuniziert.

3. Verfahren nach Anspruch 1, wobei das Vorcodieren eines Signals, das an die zweite CPE zu senden ist, basierend auf dem ersten Übersprechkoeffizienten zwischen der ersten Leitung und der mindestens einen zweiten Leitung und einem ersten Aktualisierungsfaktor Folgendes umfasst:

Erzeugen eines ersten Übersprechunterdrückungssignals basierend auf dem ersten Übersprechkoeffizienten zwischen der ersten Leitung und der mindestens einen zweiten Leitung, einem Downstream-Signal, das an die zweite CPE gesendet wird, und einem Downstream-Signal, das an die dritte CPE gesendet wird, die mit jedem zweiten Netzknoten kommuniziert;

Anpassen des ersten Übersprechunterdrückungssignals basierend auf einem zweiten Aktualisierungsfaktor und dem ersten Aktualisierungsfaktor, um ein zweites Übersprechunterdrückungssignal zu erhalten, wobei der zweite Aktualisierungsfaktor einen zweiten Übertragungsparameter eines Kanals, welcher der zweiten CPE entspricht, und einen zweiten Übertragungsparameter eines Kanals umfasst, welcher der dritten CPE entspricht, die mit jedem zweiten Netzknoten kommuniziert; und

Erzeugen des Signals, das an die zweite CPE zu senden ist, basierend auf dem zweiten Übersprechunterdrückungssignal und dem Downstream-Signal, das an die zweite CPE gesendet wird.

4. Verfahren nach einem der Ansprüche 1 bis 3, wobei das Verfahren ferner Folgendes umfasst:
wenn der erste Netzknoten mit der zweiten CPE kommuniziert, Unterdrücken eines Übersprechsignals in einem Upstream-Signal, das durch die zweite CPE gesendet wird, basierend auf dem ersten Übersprechkoeffizienten zwischen der ersten Leitung und der mindestens einen zweiten Leitung und dem ersten Aktualisierungsfaktor.

5. Verfahren nach Anspruch 4, wobei das Unterdrücken eines Übersprechsignals in einem Upstream-Signal, das durch die zweite CPE gesendet wird, basierend auf dem ersten Übersprechkoeffizienten zwischen der ersten Leitung und der mindestens einen zweiten Leitung und dem ersten Aktualisierungsfaktor Folgendes umfasst:

Anpassen des Upstream-Signals, das durch die zweite CPE gesendet wird, basierend auf dem ersten Übertragungsparameter des Kanals, welcher der CPE entspricht, die mit dem ersten Benutzerknoten verbunden ist, um das Zielsignal der zweiten CPE zu erhalten;

Anpassen eines Upstream-Signals, das durch die dritte CPE gesendet wird, die mit jedem von dem mindestens einen zweiten Netzknoten kommuniziert, basierend auf dem ersten Übertragungsparameter des Kanals, welcher der CPE entspricht, die mit jedem zweiten Benutzerknoten verbunden ist, um das Zielsignal der dritten CPE zu erhalten, die mit jedem zweiten Netzknoten kommuniziert; und

Unterdrücken eines Übersprechsignals in dem Zielsignal der zweiten CPE basierend auf dem ersten Übersprechkoeffizienten zwischen der ersten Leitung und der mindestens einen zweiten Leitung, dem Zielsignal der zweiten CPE und dem Zielsignal der dritten CPE, die mit jedem zweiten Netzknoten kommuniziert.

6. Verfahren nach Anspruch 4, wobei das Unterdrücken eines Übersprechsignals in einem Upstream-Signal, das durch die zweite CPE gesendet wird, basierend auf dem ersten Übersprechkoeffizienten zwischen der ersten Leitung und der mindestens einen zweiten Leitung und dem ersten Aktualisierungsfaktor Folgendes umfasst:

Anpassen des ersten Übersprechkoeffizienten zwischen der ersten Leitung und der mindestens einen zweiten Leitung basierend auf dem zweiten Aktualisierungsfaktor und dem ersten Aktualisierungsfaktor, um den zweiten Übersprechkoeffizienten zwischen der ersten Leitung und der mindestens einen zweiten Leitung zu erhalten, wobei der zweite Aktualisierungsfaktor den zweiten Übertragungsparameter des Kanals, welcher der zweiten CPE entspricht, und den zweiten Übertragungsparameter des Kanals umfasst, welcher der dritten CPE entspricht, die mit jedem zweiten Netzknoten kommuniziert; und

Unterdrücken des Übersprechsignals in dem Upstream-Signal, das durch die zweite CPE gesendet wird, basierend auf dem zweiten Übersprechkoeffizienten zwischen der ersten Leitung und der mindestens einen zweiten Leitung, dem Upstream-Signal, das durch die zweite CPE gesendet wird, und einem Upstream-Signal, das durch die dritte CPE gesendet wird, die mit jedem zweiten Netzknoten kommuniziert.

7. Verfahren nach Anspruch 4, wobei das Unterdrücken eines Übersprechsignals in einem Upstream-Signal, das durch die zweite CPE gesendet wird, basierend auf dem ersten Übersprechkoeffizienten zwischen der ersten Leitung und der mindestens einen zweiten Leitung und dem ersten Aktualisierungsfaktor Folgendes umfasst:

Erzeugen des ersten Übersprechunterdrückungssignals basierend auf dem ersten Übersprechkoeffizienten zwischen der ersten Leitung und der mindestens einen zweiten Leitung, dem Upstream-Signal, das durch die zweite CPE gesendet wird, und einem Upstream-Signal, das durch die dritte CPE gesendet wird, die mit jedem zweiten Netzknoten kommuniziert;

Anpassen des ersten Übersprechunterdrückungssignals basierend auf dem zweiten Aktualisierungsfaktor und dem ersten Aktualisierungsfaktor, um das zweite Übersprechunterdrückungssignal zu erhalten, wobei der zweite Aktualisierungsfaktor den zweiten Übertragungsparameter des Kanals, welcher der zweiten CPE entspricht, und den zweiten Übertragungsparameter des Kanals umfasst, welcher der dritten CPE entspricht, die mit jedem zweiten Netzknoten kommuniziert; und

Unterdrücken des Übersprechsignals in dem Upstream-Signal, das durch die zweite CPE gesendet wird, basierend auf dem zweiten Übersprechunterdrückungssignal.

8. Vorrichtung (1000) zur Unterdrückung von Übersprechsignalen, wobei die Vorrichtung (1000) eine Verarbeitungseinheit (1001) umfasst und auf ein Twisted-Pair-Kommunikationssystem angewandt wird, wobei das Twisted-Pair-Kommunikationssystem eine erste Leitung und mindestens eine zweite Leitung umfasst, wobei die erste Leitung einen ersten Netzknoten und einen ersten Benutzerknoten verbindet, und wobei die mindestens eine zweite Leitung mindestens einen zweiten Netzknoten und mindestens einen zweiten Benutzerknoten verbindet; wobei es Übersprechen zwischen der ersten Leitung und der mindestens einen zweiten Leitung gibt; wobei der erste Benutzerknoten mit mindestens einer ersten kundenseitigen Ausrüstung (customer-premises equipment - CPE) und einer zweiten CPE verbunden ist; und wobei die erste CPE und die zweite CPE mit dem ersten Netzknoten in einer Zeitmultiplex-Weise kommunizieren; wobei

die Verarbeitungseinheit (1001) für Folgendes konfiguriert ist: wenn der erste Netzknoten mit der ersten CPE kommuniziert, Erhalten eines ersten Übersprechkoeffizienten zwischen der ersten Leitung und der mindestens einen zweiten Leitung basierend auf einem Fehlersignal, das durch die erste CPE rückgekoppelt wird, wobei der erste Übersprechkoeffizient verwendet wird, um ein Signal vorzucodieren, das an die erste CPE zu senden ist; und

die Verarbeitungseinheit (1001) ferner für Folgendes konfiguriert ist: wenn der erste Netzknoten mit der zweiten CPE kommuniziert, Vorcodieren eines Signals, das an die zweite CPE zu senden ist, basierend auf dem ersten Übersprechkoeffizienten zwischen der ersten Leitung und der mindestens einen zweiten Leitung und einem ersten Aktualisierungsfaktor, wobei der erste Aktualisierungsfaktor verwendet wird, um eine Änderung des ersten Übersprechkoeffizienten zwischen der ersten Leitung und der mindestens einen zweiten Leitung oder eine Änderung von Übersprechsignalen darzustellen, die auf der ersten Leitung und der mindestens einen zweiten Leitung erzeugt werden,
**dadurch gekennzeichnet, dass**

der erste Aktualisierungsfaktor einen ersten Übertragungsparameter eines Kanals, der einer CPE entspricht, die mit dem ersten Benutzerknoten verbunden ist, und einen ersten Übertragungsparameter eines Kanals umfasst, der einer CPE entspricht, die mit jedem von dem mindestens einen zweiten Benutzerknoten verbunden ist; und

wobei die Verarbeitungseinheit (1001) ferner für Folgendes konfiguriert ist:

Anpassen eines Downstream-Signals, das an die zweite CPE gesendet wird, basierend auf dem ersten Übertragungsparameter des Kanals, welcher der CPE entspricht, die mit dem ersten Benutzerknoten verbunden ist, um ein Zielsignal der zweiten CPE zu erhalten;

Anpassen eines Downstream-Signals, das an die dritte CPE gesendet wird, die mit jedem von dem mindestens einen zweiten Netzknoten kommuniziert, basierend auf dem ersten Übertragungsparameter des Kanals, welcher der CPE entspricht, die mit jedem zweiten Benutzerknoten verbunden ist, um ein Zielsignal der dritten CPE zu erhalten, die mit jedem zweiten Netzknoten kommuniziert; und

Vorcodieren des Signals, das an die zweite CPE zu senden ist, basierend auf dem ersten Übersprechkoeffizienten zwischen der ersten Leitung und der mindestens einen zweiten Leitung, dem Zielsignal der zweiten CPE und dem Zielsignal der dritten CPE, die mit jedem zweiten Netzknoten kommuniziert.

9. Vorrichtung (1000) nach Anspruch 8, wobei, dass die Verarbeitungseinheit (1001) den Vorgang des Vorcodierens eines Signals, das an die zweite CPE zu senden ist, basierend auf dem ersten Übersprechkoeffizienten zwischen der ersten Leitung und der mindestens einen zweiten Leitung und einem ersten Aktualisierungsfaktor durchführt, Folgendes umfasst:

Anpassen des ersten Übersprechkoeffizienten zwischen der ersten Leitung und der mindestens einen zweiten Leitung basierend auf einem zweiten Aktualisierungsfaktor und dem ersten Aktualisierungsfaktor, um einen zweiten Übersprechkoeffizienten zwischen der ersten Leitung und der mindestens einen zweiten Leitung zu erhalten, wobei der zweite Aktualisierungsfaktor einen zweiten Übertragungsparameter eines Kanals, welcher der zweiten CPE entspricht, und einen zweiten Übertragungsparameter eines Kanals umfasst, welcher der dritten CPE entspricht, die mit jedem zweiten Netzknoten kommuniziert; und

Vorcodieren des Signals, das an die zweite CPE zu senden ist, basierend auf dem zweiten Übersprechkoeffizienten zwischen der ersten Leitung und der mindestens einen zweiten Leitung, einem Downstream-Signal, das an die zweite CPE gesendet wird, und einem Downstream-Signal, das an die dritte CPE gesendet wird, die mit jedem zweiten Netzknoten kommuniziert.

10. Vorrichtung (1000) nach Anspruch 8, wobei, dass die Verarbeitungseinheit (1001) den Vorgang des Vorcodierens eines Signals, das an die zweite CPE zu senden ist, basierend auf dem ersten Übersprechkoeffizienten zwischen der ersten Leitung und der mindestens einen zweiten Leitung und einem ersten Aktualisierungsfaktor durchführt, Folgendes umfasst:

Erzeugen eines ersten Übersprechunterdrückungssignals basierend auf dem ersten Übersprechkoeffizienten zwischen der ersten Leitung und der mindestens einen zweiten Leitung, einem Downstream-Signal, das an die zweite CPE gesendet wird, und einem Downstream-Signal, das an die dritte CPE gesendet wird, die mit jedem zweiten Netzknoten kommuniziert;

Anpassen des ersten Übersprechunterdrückungssignals basierend auf einem zweiten Aktualisierungsfaktor und dem ersten Aktualisierungsfaktor, um ein zweites Übersprechunterdrückungssignal zu erhalten, wobei der zweite Aktualisierungsfaktor einen zweiten Übertragungsparameter eines Kanals, welcher der zweiten CPE entspricht, und einen zweiten Übertragungsparameter eines Kanals umfasst, welcher der dritten CPE entspricht, die mit jedem zweiten Netzknoten kommuniziert; und

Erzeugen des Signals, das an die zweite CPE zu senden ist, basierend auf dem zweiten Übersprechunterdrückungssignal und dem Downstream-Signal, das an die zweite CPE gesendet wird.

11. Twisted-Pair-Kommunikationssystem, wobei das Twisted-Pair-Kommunikationssystem die Vorrichtung (1000) nach einem der Ansprüche 8 bis 10 umfasst.

**Revendications**

1. Procédé d'annulation de signal de diaphonie, dans lequel le procédé est appliqué à un système de communication à paire torsadée, le système de communication à paire torsadée comprend une première ligne et au moins une seconde ligne, la première ligne connecte un premier nœud de réseau et un premier nœud d'utilisateur, et l'au moins une seconde ligne connecte au moins un second nœud de réseau et au moins un second nœud d'utilisateur ; une diaphonie existe entre la première ligne et l'au moins une seconde ligne ; le premier nœud d'utilisateur est connecté à au moins un premier équipement des locaux d'abonné, CPE, et un deuxième CPE ; et le premier CPE et le deuxième CPE communiquent avec le premier nœud de réseau d'une manière à multiplexage temporel ; dans lequel le procédé comprend :

lorsque le premier nœud de réseau communique avec le premier CPE, l'obtention d'un premier coefficient de diaphonie entre la première ligne et l'au moins une seconde ligne sur la base d'un signal d'erreur renvoyé par le premier CPE, dans lequel le premier coefficient de diaphonie est utilisé pour précoder un signal à envoyer au premier CPE ; et

lorsque le premier nœud de réseau communique avec le deuxième CPE, le précodage, sur la base du premier coefficient de diaphonie entre la première ligne et l'au moins une seconde ligne et d'un premier facteur de mise à jour, d'un signal à envoyer au deuxième CPE, dans lequel le premier facteur de mise à jour est utilisé pour représenter un changement du premier coefficient de diaphonie entre la première ligne et l'au moins une seconde ligne ou un changement de signaux de diaphonie générés sur la première ligne et l'au moins une seconde ligne ;
**caractérisé en ce que**
le premier facteur de mise à jour comprend un premier paramètre de transmission d'un canal correspondant à un CPE connecté au premier nœud d'utilisateur et un premier paramètre de transmission d'un canal correspondant à un CPE connecté à chacun de l'au moins un second nœud d'utilisateur ; et
dans lequel le précodage, sur la base du premier coefficient de diaphonie entre la première ligne et l'au moins une seconde ligne et d'un premier facteur de mise à jour, d'un signal à envoyer au deuxième CPE comprend :

le réglage, sur la base du premier paramètre de transmission du canal correspondant au CPE connecté au premier nœud d'utilisateur, d'un signal aval envoyé au deuxième CPE, pour obtenir un signal cible du deuxième CPE ;
le réglage, sur la base du premier paramètre de transmission du canal correspondant au CPE connecté à chaque second nœud d'utilisateur, d'un signal aval envoyé au troisième CPE qui communique avec chacun de l'au moins un second nœud de réseau, pour obtenir un signal cible du troisième CPE qui communique avec chaque second nœud de réseau ; et
le précodage, sur la base du premier coefficient de diaphonie entre la première ligne et l'au moins une seconde ligne, du signal cible du deuxième CPE, et du signal cible du troisième CPE qui communique à chaque second nœud de réseau le signal à envoyer au deuxième CPE.

2. Procédé selon la revendication 1, dans lequel le précodage, sur la base du premier coefficient de diaphonie entre la première ligne et l'au moins une seconde ligne et d'un premier facteur de mise à jour, d'un signal à envoyer au deuxième CPE comprend :

le réglage du premier coefficient de diaphonie entre la première ligne et l'au moins une seconde ligne sur la base d'un second facteur de mise à jour et du premier facteur de mise à jour, pour obtenir un second coefficient de diaphonie entre la première ligne et l'au moins une seconde ligne, dans lequel le second facteur de mise à jour comprend un second paramètre de transmission d'un canal correspondant au deuxième CPE et un second paramètre de transmission d'un canal correspondant au troisième CPE qui communique avec chaque second nœud de réseau ; et
le précodage, sur la base du second coefficient de diaphonie entre la première ligne et l'au moins une seconde ligne, d'un signal aval envoyé au deuxième CPE, et d'un signal aval envoyé au troisième CPE qui communique à chaque second nœud de réseau le signal à envoyer au deuxième CPE.

3. Procédé selon la revendication 1, dans lequel le précodage, sur la base du premier coefficient de diaphonie entre la première ligne et l'au moins une seconde ligne et d'un premier facteur de mise à jour, d'un signal à envoyer au deuxième CPE comprend :

la génération d'un premier signal d'annulation de diaphonie, sur la base du premier coefficient de diaphonie entre la première ligne et l'au moins une seconde ligne, d'un signal aval envoyé au deuxième CPE, et d'un signal aval envoyé au troisième CPE qui communique avec chaque second nœud de réseau ;
le réglage du premier signal d'annulation de diaphonie sur la base d'un second facteur de mise à jour et du premier facteur de mise à jour, pour obtenir un second signal d'annulation de diaphonie, dans lequel le second facteur de mise à jour comprend un second paramètre de transmission d'un canal correspondant au deuxième CPE et un second paramètre de transmission d'un canal correspondant au troisième CPE qui communique avec chaque second nœud de réseau ; et

la génération, sur la base du second signal d'annulation de diaphonie et du signal aval envoyé au deuxième CPE, du signal à envoyer au deuxième CPE.

4. Procédé selon l'une quelconque des revendications 1 à 3, dans lequel le procédé comprend en outre :
lorsque le premier nœud de réseau communique avec le deuxième CPE, l'annulation, sur la base du premier coefficient de diaphonie entre la première ligne et l'au moins une seconde ligne et du premier facteur de mise à jour, d'un signal de diaphonie dans un signal amont envoyé par le deuxième CPE.

5. Procédé selon la revendication 4, dans lequel l'annulation, sur la base du premier coefficient de diaphonie entre la première ligne et l'au moins une seconde ligne et le premier facteur de mise à jour, d'un signal de diaphonie dans un signal amont envoyé par le deuxième CPE comprend :

le réglage, sur la base du premier paramètre de transmission du canal correspondant au CPE connecté au premier nœud d'utilisateur, du signal amont envoyé par le deuxième CPE, pour obtenir le signal cible du deuxième CPE ;

le réglage, sur la base du premier paramètre de transmission du canal correspondant au CPE connecté à chaque second nœud d'utilisateur, d'un signal amont envoyé par le troisième CPE qui communique avec chacun de l'au moins un second nœud de réseau, pour obtenir le signal cible du troisième CPE qui communique avec chaque second nœud de réseau ; et

l'annulation d'un signal de diaphonie dans le signal cible du deuxième CPE, sur la base du premier coefficient de diaphonie entre la première ligne et l'au moins une seconde ligne, du signal cible du deuxième CPE, et du signal cible du troisième CPE qui communique avec chaque second nœud de réseau.

6. Procédé selon la revendication 4, dans lequel l'annulation, sur la base du premier coefficient de diaphonie entre la première ligne et l'au moins une seconde ligne et le premier facteur de mise à jour, d'un signal de diaphonie dans un signal amont envoyé par le deuxième CPE comprend :

le réglage du premier coefficient de diaphonie entre la première ligne et l'au moins une seconde ligne sur la base du second facteur de mise à jour et du premier facteur de mise à jour, pour obtenir le second coefficient de diaphonie entre la première ligne et l'au moins une seconde ligne, dans lequel le second facteur de mise à jour comprend le second paramètre de transmission du canal correspondant au deuxième CPE et le second paramètre de transmission du canal correspondant au troisième CPE qui communique avec chaque second nœud de réseau ; et

l'annulation, sur la base du second coefficient de diaphonie entre la première ligne et l'au moins une seconde ligne, du signal amont envoyé par le deuxième CPE, et d'un signal amont envoyé par le troisième CPE qui communique à chaque second nœud de réseau le signal de diaphonie dans le signal amont envoyé par le deuxième CPE.

7. Procédé selon la revendication 4, dans lequel l'annulation, sur la base du premier coefficient de diaphonie entre la première ligne et l'au moins une seconde ligne et le premier facteur de mise à jour, d'un signal de diaphonie dans un signal amont envoyé par le deuxième CPE comprend :

la génération du premier signal d'annulation de diaphonie, sur la base du premier coefficient de diaphonie entre la première ligne et l'au moins une seconde ligne, du signal amont envoyé par le deuxième CPE, et d'un signal amont envoyé par le troisième CPE qui communique avec chaque second nœud de réseau ;

le réglage du premier signal d'annulation de diaphonie sur la base du second facteur de mise à jour et du premier facteur de mise à jour, pour obtenir le second signal d'annulation de diaphonie, dans lequel le second facteur de mise à jour comprend le second paramètre de transmission du canal correspondant au deuxième CPE et le second paramètre de transmission du canal correspondant au troisième CPE qui communique avec chaque second nœud de réseau ; et

l'annulation, sur la base du second signal d'annulation de diaphonie, du signal de diaphonie dans le signal amont envoyé par le deuxième CPE.

8. Appareil d'annulation de signal de diaphonie (1000), dans lequel l'appareil (1000) comprend une unité de traitement (1001) et est appliqué à un système de communication à paire torsadée, le système de communication à paire torsadée comprend une première ligne et au moins une seconde ligne, la première ligne connecte un premier nœud de réseau et un premier nœud d'utilisateur, et l'au moins une seconde ligne connecte au moins un second nœud de réseau et au moins un second nœud d'utilisateur ; une diaphonie existe entre la première ligne et l'au moins une seconde ligne ; le premier nœud d'utilisateur est connecté à au moins un premier équipement des locaux d'abonné, CPE, et un deuxième CPE ; et le premier CPE et le deuxième CPE communiquent avec le premier nœud de réseau d'une manière à multiplexage temporel ; dans lequel

l'unité de traitement (1001) est conçue pour : lorsque le premier nœud de réseau communique avec le premier CPE, obtenir un premier coefficient de diaphonie entre la première ligne et l'au moins une seconde ligne sur la base d'un signal d'erreur renvoyé par le premier CPE, dans lequel le premier coefficient de diaphonie est utilisé pour précoder un signal à envoyer au premier CPE ; et
l'unité de traitement (1001) est en outre conçue pour :

lorsque le premier nœud de réseau communique avec le deuxième CPE, précoder, sur la base du premier coefficient de diaphonie entre la première ligne et l'au moins une seconde ligne et d'un premier facteur de mise à jour, un signal à envoyer au deuxième CPE, dans lequel le premier facteur de mise à jour est utilisé pour représenter un changement du premier coefficient de diaphonie entre la première ligne et l'au moins une seconde ligne ou un changement de signaux de diaphonie générés sur la première ligne et l'au moins une seconde ligne,
**caractérisé en ce que**
le premier facteur de mise à jour comprend un premier paramètre de transmission d'un canal correspondant à un CPE connecté au premier nœud d'utilisateur et un premier paramètre de transmission d'un canal correspondant à un CPE connecté à chacun de l'au moins un second nœud d'utilisateur ; et
dans lequel l'unité de traitement (1001) est en outre conçue pour :

régler, sur la base du premier paramètre de transmission du canal correspondant au CPE connecté au premier nœud d'utilisateur, un signal aval envoyé au deuxième CPE, pour obtenir un signal cible du deuxième CPE ;
régler, sur la base du premier paramètre de transmission du canal correspondant au CPE connecté à chaque second nœud d'utilisateur, un signal aval envoyé au troisième CPE qui communique avec chacun de l'au moins un second nœud de réseau, pour obtenir un signal cible du troisième CPE qui communique avec chaque second nœud de réseau ; et
précoder, sur la base du premier coefficient de diaphonie entre la première ligne et l'au moins une seconde ligne, le signal cible du deuxième CPE, et le signal cible du troisième CPE qui communique à chaque second nœud de réseau le signal à envoyer au deuxième CPE.

9. Appareil (1000) selon la revendication 8, dans lequel le fait que l'unité de traitement (1001) exécute l'opération de précodage, sur la base du premier coefficient de diaphonie entre la première ligne et l'au moins une seconde ligne et d'un premier facteur de mise à jour, d'un signal à envoyer au deuxième CPE comprend :

le réglage du premier coefficient de diaphonie entre la première ligne et l'au moins une seconde ligne sur la base d'un second facteur de mise à jour et du premier facteur de mise à jour, pour obtenir un second coefficient de diaphonie entre la première ligne et l'au moins une seconde ligne, dans lequel le second facteur de mise à jour comprend un second paramètre de transmission d'un canal correspondant au deuxième CPE et un second paramètre de transmission d'un canal correspondant au troisième CPE qui communique avec chaque second nœud de réseau ; et
le précodage, sur la base du second coefficient de diaphonie entre la première ligne et l'au moins une seconde ligne, d'un signal aval envoyé au deuxième CPE, et d'un signal aval envoyé au troisième CPE qui communique à chaque second nœud de réseau le signal à envoyer au deuxième CPE.

10. Appareil (1000) selon la revendication 8, dans lequel le fait que l'unité de traitement (1001) exécute l'opération de précodage, sur la base du premier coefficient de diaphonie entre la première ligne et l'au moins une seconde ligne et d'un premier facteur de mise à jour, d'un signal à envoyer au deuxième CPE comprend :

la génération d'un premier signal d'annulation de diaphonie, sur la base du premier coefficient de diaphonie entre la première ligne et l'au moins une seconde ligne, d'un signal aval envoyé au deuxième CPE, et d'un signal aval envoyé au troisième CPE qui communique avec chaque second nœud de réseau ;
le réglage du premier signal d'annulation de diaphonie sur la base d'un second facteur de mise à jour et du premier facteur de mise à jour, pour obtenir un second signal d'annulation de diaphonie, dans lequel le second facteur de mise à jour comprend un second paramètre de transmission d'un canal correspondant au deuxième CPE et un second paramètre de transmission d'un canal correspondant au troisième CPE qui communique avec chaque second nœud de réseau ; et

la génération, sur la base du second signal d'annulation de diaphonie et du signal aval envoyé au deuxième CPE, du signal à envoyer au deuxième CPE.

11. Système de communication à paire torsadée, dans lequel le système de communication à paire torsadée comprend l'appareil (1000) selon l'une quelconque des revendications 8 à 10.

FIG. 1-1

```
  ┌────┐
  │ D1 │
  └────┘                                              ┌────┐
  ┌────┐                                          ┌───│ C1 │
  │ D2 │────────●                       ●─────────    └────┘
  └────┘       U4                      U3         ┌───┌────┐
  ┌────┐                                              │ C2 │
  │ D3 │────────                                      └────┘
  └────┘       U4               U3           Second floor

  ┌────┐
  │ B1 │                                              ┌────┐
  └────┘                                          ┌───│ A1 │
  ┌────┐                                          │   └────┘
  │ B2 │────────●               ●─────────────────
  └────┘       U2              U1                 │   ┌────┐
  ┌────┐                                              │ A2 │
  │ B3 │────────                                      └────┘
  └────┘       U2              U1             First floor

                                             Basement

                    ┌──────────────┐
                    │   Network    │
                    │   device     │
                    └──────────────┘
```

FIG. 1-2

| When a first network node communicates with first CPE, obtain a first crosstalk coefficient between a first line and at least one second line based on error information fed back by the first CPE, where the first crosstalk coefficient is used to precode a signal to be sent to the first CPE | 201 |

| When the first network node communicates with second CPE, precode, based on the first crosstalk coefficient between the first line and the at least one second line and a first update factor, a signal to be sent to the second CPE | 202 |

FIG. 2-1

FIG. 2-2

A network device obtains a first update factor, where the first update factor includes a first transmission parameter of a channel corresponding to one CPE connected to a first user node and a first transmission parameter of a channel corresponding to one CPE connected to each second user node — 301

When first network node communicates with first CPE, obtain a first crosstalk coefficient between a first line and at least one second line based on error information fed back by the first CPE, where the first crosstalk coefficient between the first line and the at least one second line is used to precode a signal to be sent to the first CPE — 302

When the first network node communicates with second CPE, precode, based on the first crosstalk coefficient between the first line and the at least one second line and the first update factor, a signal to be sent to the second CPE — 303

FIG. 3

When a first network node communicates with first CPE, obtain a first crosstalk coefficient between first line and at least one second line based on error information fed back by the first CPE, where the first crosstalk coefficient is used to precode a signal to be sent to the first CPE — 401

A network device obtains a first update factor, where the first update factor includes a first transmission parameter of a channel corresponding to the first CPE and a first transmission parameter of a channel corresponding to each fourth CPE — 402

When the first network node communicates with second CPE, adjust the first crosstalk coefficient between the first line and the at least one second line based on a second update factor and the first update factor, to obtain a second crosstalk coefficient between the first line and the at least one second line — 403

Precode, based on the second crosstalk coefficient between the first line and the at least one second line, a downstream signal sent to the second CPE, and a downstream signal sent to third CPE that communicates with each second network node, a signal to be sent to the second CPE — 404

FIG. 4

When a first network node communicates with first CPE, obtain a first crosstalk coefficient between a first line and at least one second line based on error information fed back by the first CPE, where the first crosstalk coefficient is used to precode a signal to be sent to the first CPE — 501

A network device obtains a first update factor, where the first update factor includes a first transmission parameter of a channel corresponding to the first CPE and a first transmission parameter of a channel corresponding to each fourth CPE — 502

When the first network node communicates with second CPE, generate a first crosstalk cancellation signal based on the first crosstalk coefficient between the first line and the at least one second line, a downstream signal sent to the second CPE, and a downstream signal sent to third CPE that communicates with each second network node — 503

Adjust the first crosstalk cancellation signal based on a second update factor and the first update factor, to obtain a second crosstalk cancellation signal, where the second update factor includes a second transmission parameter of a channel corresponding to the second CPE and a second transmission parameter of a channel corresponding to the third CPE that communicates with each second network node — 504

Generate, based on the second crosstalk cancellation signal and the downstream signal sent to the second CPE, a signal to be sent to the second CPE — 505

FIG. 5

When a first network node communicates with first CPE, obtain a first crosstalk coefficient between a first line and at least one second line based on error information corresponding to the first CPE, where the first crosstalk coefficient is used to precode a signal to be sent to the first CPE — 601

When the first network node communicates with second CPE, cancel, based on the first crosstalk coefficient between the first line and the at least one second line and a first update factor, a crosstalk signal in an upstream signal sent by the second CPE — 602

## FIG. 6

A network device obtains a first update factor and a TA of each CPE, where the first update factor includes a first transmission parameter of a channel corresponding to one CPE connected to a first user node and a first transmission parameter of a channel corresponding to one CPE connected to each second user node — 701

Send the TA of each CPE to each CPE — 702

When a first network node communicates with first CPE, obtain a first crosstalk coefficient between a first line and at least one second line based on error information corresponding to the first CPE — 703

When the first network node communicates with second CPE, cancel, based on the first crosstalk coefficient between the first line and the at least one second line and the first update factor, a crosstalk signal in an upstream signal sent by the second CPE — 704

## FIG. 7

When a first network node communicates with first CPE, obtain a first crosstalk coefficient between first line and at least one second line based on error information corresponding to the first CPE, where the first crosstalk coefficient is used to precode a signal to be sent to the first CPE — 801

A network device obtains a first update factor, where the first update factor includes a first transmission parameter of a channel corresponding to the first CPE and a first transmission parameter of a channel corresponding to each fourth CPE — 802

When the first network node communicates with second CPE, adjust the first crosstalk coefficient between the first line and the at least one second line based on a second update factor and the first update factor, to obtain a second crosstalk coefficient between the first line and the at least one second line — 803

Cancel a crosstalk signal in an upstream signal of the second CPE based on the second crosstalk coefficient between the first line and the at least one second line, the upstream signal sent by the second CPE, and an uptream signal sent by each third CPE — 804

FIG. 8

When a first network node communicates with first CPE, obtain a first crosstalk coefficient between first line and at least one second line based on error information corresponding to the first CPE, where the first crosstalk coefficient is used to precode a signal to be sent to the first CPE — 901

A network device obtains a first update factor, where the first update factor includes a first transmission parameter of a channel corresponding to the first CPE and a first transmission parameter of a channel corresponding to each fourth CPE — 902

When the first network node communicates with second CPE, generate a first crosstalk cancellation signal based on the first crosstalk coefficient between the first line and the at least one second line, an upstream signal sent by the second CPE, and an upstream signal sent by third CPE that communicates with each second network node — 903

Adjust the first crosstalk cancellation signal based on a second update factor and the first update factor, to obtain a second crosstalk cancellation signal, where the second update factor includes a second transmission parameter of a channel corresponding to the second CPE and a second transmission parameter of a channel corresponding to the third CPE that communicates with each second network node — 904

Cancel, by using the second crosstalk cancellation signal, a crosstalk signal in the upstream signal sent by the second CPE — 905

FIG. 9

FIG. 10-1

FIG. 10-2

Apparatus 1100

| Processor 1103 | Input interface 1101 | First network node 1105 |

1107

| Memory 1104 | Output interface 1102 | Second network node 1106 |

FIG. 11

**EP 3 687 075 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2016119025 A1
- WO 2015179565 A1
- US 2012236915 A1